# EUROPEAN PATENT SPECIFICATION

(11) **EP 2 505 254 B1**
(45) Date of publication and mention of the grant of the patent: **11.06.2014**
(21) Application number: 12161239.4
(22) Date of filing: 26.03.2012
(51) Int. Cl.: B01D 46/24

(54) **Plugged honeycomb structure**
Abgedichtete Wabenstruktur
Structure en nid d'abeille raccordée

(30) Priority: 31.03.2011 JP 2011078711
(43) Date of publication of application: 03.10.2012
(73) Proprietor: NGK Insulators, Ltd., Nagoya-shi, Aichi 467-8530 (JP)
(72) Inventor: Takagi, Tomoyuki, Nagoya-shi, Aichi 467-8530 (JP)
(74) Representative: Paget, Hugh Charles Edward

(56) References cited:
- US-A1- 2007 128 405
- US-A1- 2007 130 897
- US-A1- 2007 144 127

## Description

### Background of the Invention and Related Art Statement

The present invention relates to a plugged honeycomb structure. More specifically, the present invention relates to a plugged honeycomb structure capable of inhibiting the increase of the pressure loss and improving the durability in a good manner.

Gas discharged from internal combustion engines such as a diesel engine, various combustion apparatuses, and the like contains a great amount of particulate matter (PM) mainly containing soot. Since release of PM in the air in situ causes environmental pollution, a diesel particulate filter (DPF) for trapping PM is mounted in the exhaust system for exhaust gas.

For such a DPF, there is used a honeycomb structure having porous partition walls separating and forming a plurality of cells functioning as fluid passages for fluid (exhaust gas, purified gas) . Thus, in a honeycomb structure are disposed plugging portions for plugging openings of cells in openings of predetermined cells (inflow cells) on fluid (exhaust gas) outflow side end face and openings of the remaining cells (outflow cells) on the fluid (exhaust gas) inflow side end face to use the honeycomb structure as a plugged honeycomb structure (honeycomb filter). As a honeycomb structure, there is proposed a honeycomb structure provided with a plurality of columnar honeycomb segments having porous partition walls separating and forming a plurality of cells extending from the inflow side end face to the outflow side end face and functioning as fluid passages, the segments being bonded in a state that side faces of the honeycomb segments face one another (see, e.g., U.S. Patent No. 4335783 Specification).

In the plugged honeycomb structure, when exhaust gas is allowed to flow in from the inflow cells, particulate matter in the exhaust gas is trapped by the partition walls when the exhaust gas passes through the partition walls, and purified gas from which the particulate matter is removed flows out from the outflow cells.

There has conventionally been proposed a ceramic honeycomb structure having R portions of almost an arc shape in one pair of corners facing each other in a cross section perpendicular to an axial direction of at least a part of passages (cells) in order to inhibit breakage due to excessive thermal shock or mechanical shock caused in the intersection of the partition walls of the honeycomb structure (see, e.g., JP-A-2003-269131). In addition, there has been proposed a honeycomb structure having reinforced cells by forming a reinforcer in a corner portion of a cell separated and formed by porous partition walls (see, e.g., JP-A-2009-532197).

However, since the arc-shaped R portions are formed in corner portions of all the cells in the honeycomb structure described in JP-A-2003-269131, the capacity of the passages where a fluid passes is remarkably reduced. As a result, from the viewpoint of deposition of ash contained in the exhaust gas, the plugged honeycomb structure has deteriorated durability.

In addition, in honeycomb structures described in JP-A-2003-269131 and JP-A-2009-532197, since the reinforcement is performed also in the inflow cells into which a fluid flows, the capacity of the passages (in particular, the capacity on the fluid inflow side) is reduced. This reduces the filtration area substantially functioning as a filter, and the pressure loss of the plugged honeycomb structure increases.

Further, since the mass of the plugged honeycomb structure naturally increases due to the formation of the reinforcing portions, excessive formation of the reinforcing portions may be detrimental to the performance of the plugged honeycomb structure. For example, if the mass of the plugged honeycomb structure is increased, the period of time until the honeycomb structure has the temperature necessary for purification of exhaust gas or the like increases, and exhaust gas purification performance is impaired. In addition, though raising the temperature of the exhaust gas can be considered in order to maintain the aforementioned purification performance, the fuel consumption of the internal engine of an automobile or the like is deteriorated.

That is, in a conventional honeycomb structure, reinforcing portions as described above have been formed for the purpose of simply improving strength of the honeycomb structure. However, by improving durability by forming reinforcing portions, other properties as a filter, such as pressure loss and purification performance have been sacrificed. In particular, the improvement of strength of a honeycomb structure and the inhibition of increase in pressure loss has been considered to be paradoxical, and solution of both at the same time has been considered very difficult.

In the case of using a plugged honeycomb structure as a DPF, regeneration, where trapped particulate matter is combusted and removed, may be performed. In this occasion, the plugged honeycomb structure may have a breakage such as a crack on an end face (hereinbelow sometimes referred to as an "end face crack") . There is a specific tendency in the positions where an end face crack is caused, and development of a plugged honeycomb structure taking measures against the end face crack is desired. In particular, in a plugged honeycomb structure using a honeycomb structure obtained by bonding a plurality of honeycomb segment, there may be caused a crack from the central portion of an end face of a honeycomb segment in a diagonal direction of the end face due to the concentration of stress in the central portion of the end face of the honeycomb segment.

The document US 2007/144127 A1 describes segmented honeycomb structures having reinforced channels.

### Summary of the Invention

The present invention has been made in view of the aforementioned problems and provides a plugged honeycomb structure capable of inhibiting increase in pressure loss and improving durability in a good manner by sufficiently securing the capacity of the cells into which a fluid flows (inflow cells).

According to the present invention, there is provided the plugged honeycomb structures shown below.

A plugged honeycomb structure comprising: a having a plurality of columnar honeycomb segments having porous partition walls separating and forming a plurality of cells extending from an inflow side end face to the outflow side end face and functioning as fluid passages and bonded in a state that side faces of the honeycomb segments face one another, outflow side plugging portions disposed in openings of predetermined cells on the outflow side end face of each of the honeycomb segments and forming inflow cells each of which has an open inflow side end face and a plugged outflow side end face, and inflow side plugging portions disposed in openings of remaining cells on the inflow side end face of each of the honeycomb segments and forming outflow cells each of which has an open outflow side end face and a plugged inflow side end face; wherein the honeycomb segments constituting the honeycomb structure have a complete segment having a quadrangular cross section perpendicular to the cell extension direction of the honeycomb segments, at least one of the honeycomb segments is a reinforced segment having a reinforcing portion for reinforcing the outflow cell in at least one corner portion, where the partition walls intersect one another in a cross section perpendicular to the cell extension direction, of at least the outflow cell present in the intersection portion of the diagonal lines or the outflow cell present at a position having the shortest distance from the intersection portion among the outflow cells in a region composed of the cells present on diagonal lines in the quadrangle cross section of the honeycomb segment and 5 cells adjacent to one another in series across the partition walls from the cells present on the diagonal lines, and the honeycomb segment including the centroid of the cross section of the honeycomb structure or being present at the position having the shortest distance from the centroid in the cross section perpendicular to the cell extension direction of the honeycomb structure is at least the reinforced segment.

The plugged honeycomb structure according to [1], wherein each of the outflow cells having a reinforced portion formed therein of the reinforced segment includes a reinforced corner portion having the reinforcing portion formed therein and an unreinforced corner portion having no reinforcing portion formed therein.

The plugged honeycomb structure according to [1], wherein all the corner portions in each of the outflow cells having the reinforcing portion of the reinforced segment have the reinforcing portions formed therein.

The plugged honeycomb structure according to any one of [1] to [3], wherein, in the reinforced segment, all the outflow cells present on the diagonal line on a cross section of the quadrangle of the honeycomb segment have the reinforcing portions.

The plugged honeycomb structure according to any one of [1] to [4], wherein, in the reinforced segment, the reinforcing portions are formed in the cells present on diagonal lines in the quadrangle cross section of the honeycomb segment and a region of 5 cells adjacent to one another in series across the partition walls from the cells present on the diagonal lines.

The plugged honeycomb structure according to any one of [1] to [5], wherein all the complete segments are at least the reinforced segments.

The plugged honeycomb structure according to [6], wherein all the honeycomb segments are the reinforced segments.

The plugged honeycomb structure according to any one of [1] to [7], wherein the ratio of the intersection distance in the partition wall intersection portion from the surface of the reinforcing portion of the outflow cell having the reinforcing portion formed therein to the surface of another cell disposed across the intersection of the partition walls separating and forming the outflow cell having the reinforcing portion with respect to an average thickness of the partition walls excluding the reinforcing portion is 1.5 to 9.3.

The plugged honeycomb structure according to any one of [1] to [8], wherein the reinforcing portion accounts for 0.05 to 20% of the area of the opening excluding the reinforcing portion in the cross section perpendicular to the cell extension direction.

In a plugged honeycomb structure of the present invention, "at least one of the honeycomb segments is a reinforced segment having a reinforcing portion for reinforcing the outflow cell in at least one corner portion, where the partition walls intersect one another in a cross section perpendicular to the cell extension direction, of at least the outflow cell present in the intersection portion of the diagonal lines or the outflow cell present at a position having the shortest distance from the intersection position among the outflow cells in a region of the cells present on diagonal lines in the quadrangular cross section of the honeycomb segment and a region of 5 cells adjacent to one another in series across the partition walls from the cells present on the diagonal lines" . In addition, "the honeycomb segment including the centroid of the cross section of the honeycomb structure or being present at the position having the shortest distance from the centroid in the cross section perpendicular to the cell extension direction of the honeycomb structure is at least the reinforced segment". That is, in a plugged honeycomb structure of the present invention, the outflow cells in a specified region of a honeycomb segment are reinforced cells which are reinforced by the aforementioned reinforcing portion. On the other hand, the inflow cells and the outflow cells outside the aforementioned specified region are unreinforced cells having no reinforcing portion. Therefore, the capacity of the inflow cells and the area of the openings of the inflow cells can sufficiently be secured, and therefore the increase in pressure loss of the plugged honeycomb structure can be inhibited. Meanwhile, in a part of outflow cells having small influence on the pressure loss in comparison with the inflow cells, a reinforcing portion is formed in at least one corner portion where the partition walls intersect, which can improve durability of the plugged honeycomb structure in a good manner. This can make the plugged honeycomb structure excellent in mechanical strength.

In particular, in a plugged honeycomb structure of the present invention, the capacity of the reinforcing portions taking up the passages is half or less in comparison with a conventional honeycomb structure where reinforcing portions are formed in both the inflow cells and the outflow cells. However, the durability of the honeycomb structure can be improved at a ratio not less than the capacity ratio of the reinforcing portions. In addition, since only the outflow cells having the maximum thermal stress caused in the plugged honeycomb structure are reinforced, excessive increase in the mass of the plugged honeycomb structure can be inhibited. Therefore, in the case of using the plugged honeycomb structure in an exhaust gas passage of an internal combustion engine, the plugged honeycomb structure can easily be heated, and deterioration in purification performance against the exhaust gas can be inhibited in a good manner. Incidentally, even in the case of adjusting the temperature of the plugged honeycomb structure by the temperature of the exhaust gas, since the plugged honeycomb structure is easily heated, deterioration in fuel consumption of the internal combustion engine of an automobile or the like can be inhibited. Thus, according to a plugged honeycomb structure of the present invention, the improvement of durability of a honeycomb structure and the inhibition of increase in pressure loss, which have conventionally been consideredtobeparadoxical, are compatible. Further, there can be inhibited deterioration in purification performance and deterioration in fuel consumption of the internal combustion engine.

Further, in a conventional plugged honeycomb structure using a honeycomb structure obtained by bonding a plurality of honeycomb segments, a crack may easily be caused from the central portion of an end face of a honeycomb segment in a diagonal direction of the end face due to the concentration of stress in the central portion of the end face of the honeycomb segment. In a plugged honeycomb structure of the present invention, since the portion where the aforementioned end face crack is easily caused is reinforced selectively by the aforementioned reinforcing portion, end face crack generation can be inhibited effectively.

### Brief Description of the Drawings

[Fig. 1] Fig. 1 is a perspective view schematically showing one embodiment of a plugged honeycomb structure of the present invention.

[Fig. 2] Fig. 2 is a schematic view showing an outflow side end face of one embodiment of a plugged honeycomb structure of the present invention.

[Fig. 3] Fig.3 is a schematic view showing an enlarged outflow side end face of a honeycomb segment used in one embodiment of a plugged honeycomb structure of the present invention.

[Fig. 4] Fig. 4 is a schematic view showing an enlarged inflow side end face of a honeycomb segment used in one embodiment of a plugged honeycomb structure of the present invention.

[Fig. 5] Fig. 5 is a schematic view showing an enlarged outflow side end face of a honeycomb segment used in one embodiment of a plugged honeycomb structure of the present invention.

[Fig. 6] Fig. 6 is a schematic view showing an enlarged part of a cross section perpendicular to the cell extension direction of a honeycomb segment used in one embodiment of a plugged honeycomb structure of the present invention.

[Fig. 7] Fig. 7 is a schematic view showing a cross section parallel to the cell extension direction of a honeycomb segment used in one embodiment of a plugged honeycomb structure of the present invention.

[Fig. 8] Fig. 8 is a schematic view showing an outflow side end face of one embodiment of a plugged honeycomb structure of the present invention.

[Fig. 9] Fig. 9 is a schematic view showing an enlarged outflow side end face of a honeycomb segment used in another embodiment of a plugged honeycomb structure of the present invention.

[Fig. 10] Fig. 10 is a schematic view showing an enlarged outflow side end face of a honeycomb segment used in still another embodiment of a plugged honeycomb structure of the present invention.

[Fig. 11] Fig. 11 is a schematic view showing an outflow side end face of still another embodiment of a plugged honeycomb structure of the present invention.

[Fig. 12] Fig. 12 is a schematic view showing an enlarged cross section perpendicular to the cell extension direction of one embodiment of a plugged honeycomb structure of the present invention.

### Reference numerals

1: partition wall, 2: cell, 2a: inflow cell, 2b: outflow cell, 2x: centroid cell, 3: outer peripheral wall, 4: honeycomb structure, 5a: inflow side plugging portion, 5b: outflow side plugging portion, 6, 6x: reinforcing portion, 7: outer peripheral wall, 8: honeycomb segment, 8a: complete segment, 8b: incomplete segment, 8x: reinforced segment, 8y: unreinforced segment, 11: inflow side end face, 12: outflow side end face, 21, 21a: corner portion, 22: reinforced cell, 23: unreinforced cell, 100, 110: plugged honeycomb structure, A, B, C, D: line (parallel line), E, F, G, H: intersection point, L: intersection distance of a partition wall intersection portion, T: average thickness of partition wall, O: centroid (centroid of cross section of honeycomb structure), P1, P2: diagonal line (extension of diagonal line), S: region, U: intersection portion (intersection portion of diagonal lines on cross section of honeycomb segment

### Detailed Description of the Invention

Hereinbelow, an embodiment of the present invention will be described specifically with referring to drawings. However, the present invention is by no means limited to the following embodiment, and it should be understood that an embodiment where changes, improvements, or the like is added to the following embodiment on the basis of ordinary knowledge of a person of ordinary skill in the art in a range of not deviating from the gist of the present invention is also included in the range of the present invention.

### (1) Plugged honeycomb structure:

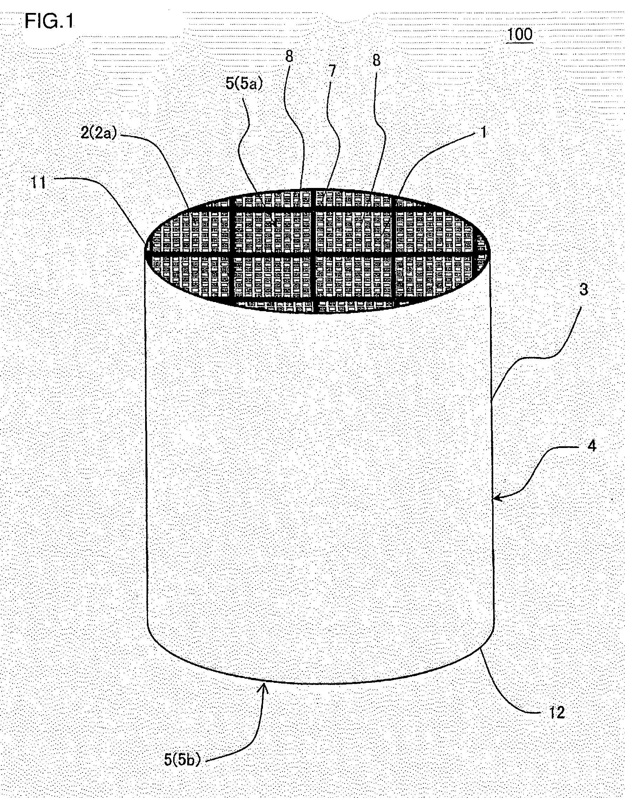

As shown in Figs. 1 to 7, one embodiment (plugged honeycomb structure 100) of a plugged honeycomb structure of the present invention is provided with a "honeycomb structure 4 having a plurality of columnar honeycomb segments 8 which have porous partition walls 1 separating and forming a plurality of cells 2 extending from an inflow side end face 11 to the outflow side end face 12 and functioning as fluid passages and which are bonded in a state that side faces of the honeycomb segments 8 face one another", "outflow side plugging portions 5b disposed in openings of predetermined cells 2 on the outflow side end face 12 of each of the honeycomb segments 8 and forming inflow cells 2a each of which has an open inflow side end face 11 and a plugged outflow side end face 12", and "inflow side plugging portions 5a disposed in openings of remaining cells 2 on the inflow side end face 11 of each of the honeycomb segments 8 and forming outflow cells 2b each of which has an open outflow side end face 12 and a plugged inflow side end face 11".

In the plugged honeycomb structure 100 of the present embodiment, the plural honeycomb segments 8 constituting the honeycomb structure 4 have a complete segment 8a having a quadrangular cross section perpendicular to the cell 2 extension direction of the honeycomb segments 8. The plugged honeycomb structure 100 may have an incomplete segment 8b constituting the outer peripheral portion of the honeycomb structure 4. The honeycomb structure 4 of the plugged honeycomb structure 100 of the present embodiment has a segment structure including a quadrangular columnar complete segment 8a and a columnar incomplete segment 8b obtained by cutting a part of a quadrangular columnar honeycomb segment similar to the complete segment 8a in accordance with the outer peripheral shape of the honeycomb structure 4. There is no particular limitation on the shape of a cross section perpendicular to the cell 2 extension direction of the cells 2 formed in each honeycomb segment 8, and an example of the shape is quadrangular. The plugged honeycomb structure 100 shown in Figs. 1 to 7 shows an example where the shape of the cross section perpendicular to the cell 2 extension direction of the cells 2 is square.

Further, in the plugged honeycomb structure 100 of the present embodiment, at least one honeycomb segment 8 constituting a honeycomb structure 4 is a reinforced honeycomb segment 8x. The reinforced segment 8x has a reinforcing portion 6 formed for reinforcing the outflow cell 2b in at least one corner portion 21, where the partition walls 1 intersect one another in a cross section perpendicular to the cell 2 extension direction, of at least the outflow cell 2b present in the intersection portion U of the diagonal lines P1, P2 or the outflow cell 2b present at a position having the shortest distance from the intersection portion U among the outflow cells 2b in a region S (hereinbelow sometimes referred to as a "diagonal line region S") composed of the cells 2 present on diagonal lines P1, P2 in the quadrangular (e.g. square) cross section of the honeycomb segment 8 and 5 cells 2 adjacent to one another in series across the partition walls 1 from the cells 2 present on the diagonal lines P1, P2. The honeycomb segment 8 including the centroid O of the cross section of the honeycomb structure 4 or being present at the position having the shortest distance from the centroid O in the cross section perpendicular to the cell 2 extension direction of the honeycomb structure 4 is at least the reinforced segment 8x.

In the outflow cells 2b in the diagonal line region S among the outflow cells 2b of the reinforced segment 8x, a reinforcing portion 6 for reinforcing the outflow cells 2b may be formed in at least one corner portion 21 where the partition walls 1 intersect one another. A reinforcing portion 6 is necessarily formed in the outflow cells 2b present in the intersection portion U of the diagonal lines P1, P2 or the outflow cells 2b present at a position having the shortest distance from the intersection portion U among the outflow cells 2b in the diagonal line region S. Hereinbelow, the cell (outflow cell 2b) having the reinforcing portion 6 for reinforcing the outflow cell 2b is sometimes referred to as a "reinforced cell 22".

In addition, in the reinforced segment 8x, neither the inflow cells 2a nor the outflow cells 2b other than the aforementioned reinforced cells 22 have the aforementioned reinforcing portion 6 in any of the corner portions 21 where the partition walls 1 intersects one another in the cross section perpendicular to the cell 2 extension direction. The cells thus having no reinforcing portion 6 is sometimes referred to as an "unreinforced cell 23".

That is, in the plugged honeycomb structure 100 of the present embodiment, the aforementioned reinforcing portion 6 is not formed in the inflow cells 2a into which a fluid flows in any of the honeycomb segments. For example, the cells are separated and formed by the partition walls 1 having relatively uniform partition wall thickness. In addition, regarding the outflow cells 2b from which the fluid flows out, the outflow cells 2b outside the diagonal line region S do not have the reinforcing portion 6 formed therein. Only the outflow cells 2b in the aforementioned diagonal line region S can become the reinforced cells 22 by forming the reinforcing portions 6.

The honeycomb segment 8 where the reinforcing portions 6 are formed is a honeycomb segment 8 including the centroid O of the cross section of the honeycomb structure 4 or being present at the position having the shortest distance from the centroid O in the cross section perpendicular to the cell 2 extension direction of the honeycomb structure 4. As long as the honeycomb segment 8 including the centroid O of the cross section of the honeycomb structure 4 or being present at the position having the shortest distance from the centroid O is the reinforced segment 8x, the other honeycomb segments 8 may be the reinforced segments 8x or ordinary segments (hereinbelow sometimes referred to as the "unreinforced segment") having no reinforcing portion 6 formed therein.

Thus, in a plugged honeycomb structure of the present embodiment, even in the case that formation of the reinforcing portions is maximized, the inflow cells and the outflow cells outside the diagonal line region of all the honeycomb segments serve as unreinforced cells. Therefore, the capacity of the inflow cells and the predetermined outflow cells and the area of the openings of the inflow cells can sufficiently be secured, thereby inhibiting the increase of the pressure loss of the plugged honeycomb structure. On the other hand, by forming a reinforcing portion in at least one corner portion where partition walls intersect one another in a part of the outflow cells which have a small influence on the pressure loss in comparison with the inflow cells, durability of the plugged honeycomb structure can be improved in a good manner. This makes the plugged honeycomb structure excellent in mechanical strength.

Particularly, in the plugged honeycomb structure of the present invention, the capacity of the reinforcing portion in the passages is half or less in comparison with the conventional honeycomb structure where the reinforcing portions are formed in both the inflow cells and the outflow cells. However, the durability of the honeycomb structure can be improved at least the same rate as the capacity proportion of the aforementioned reinforcing portions. In addition, by reinforcing only the outflow cells where the thermal stress generated in the plugged honeycomb structure becomes highest, excessive increase of the mass of the plugged honeycomb structure can be inhibited. Therefore, in the case that a plugged honeycomb structure is disposed in the exhaust gas passage of an internal combustion engine, the plugged honeycomb structure can easily be heated, and deterioration in purification performance for exhaust gas can be inhibited in a good manner. Incidentally, even in the case of adjusting the temperature of the plugged honeycomb structure by the temperature of exhaust gas, since the plugged honeycomb structure is easily heated, deterioration in fuel consumption of the internal combustion engine of an automobile or the like can be inhibited. Thus, according to a plugged honeycomb structure of the present embodiment, the improvement of strength of a honeycomb structure and the inhibition of increase in pressure loss which have conventionally been considered to be paradoxical are compatible. Further, deterioration in purification performance and deterioration in fuel consumption of the internal combustion engine can be inhibited.

Further, in a conventional plugged honeycomb structure using a honeycomb structure where plural honeycomb segments are bonded together, stress is concentrated in the central portion of an end face of a honeycomb segment, and a crack (end face crack) is prone to generate in the diagonal line direction of the end face. In the plugged honeycomb structure of the present embodiment, since the portion where the aforementioned end face crack is prone to generate is selectively reinforced by the aforementioned reinforcing portion, generation of the end face crack can effectively be inhibited.

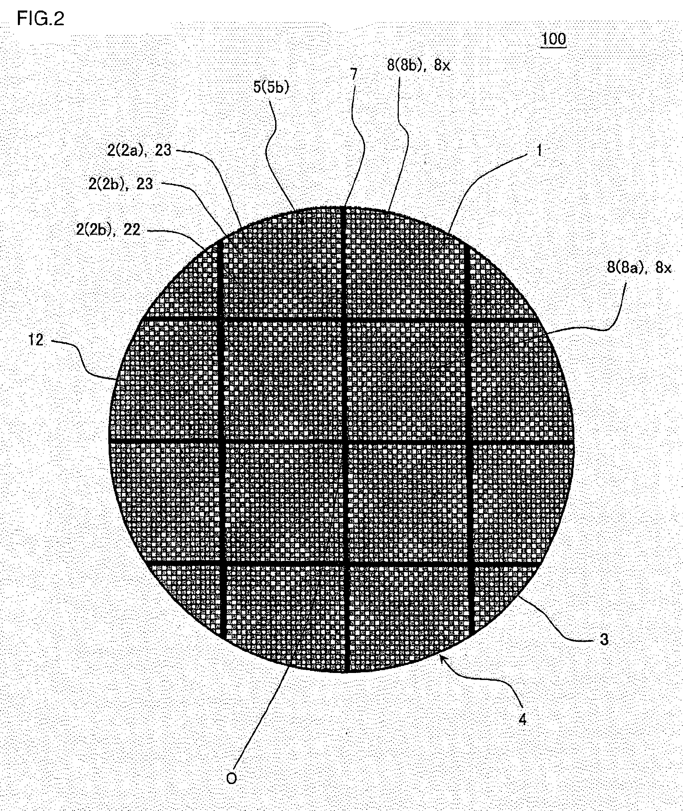

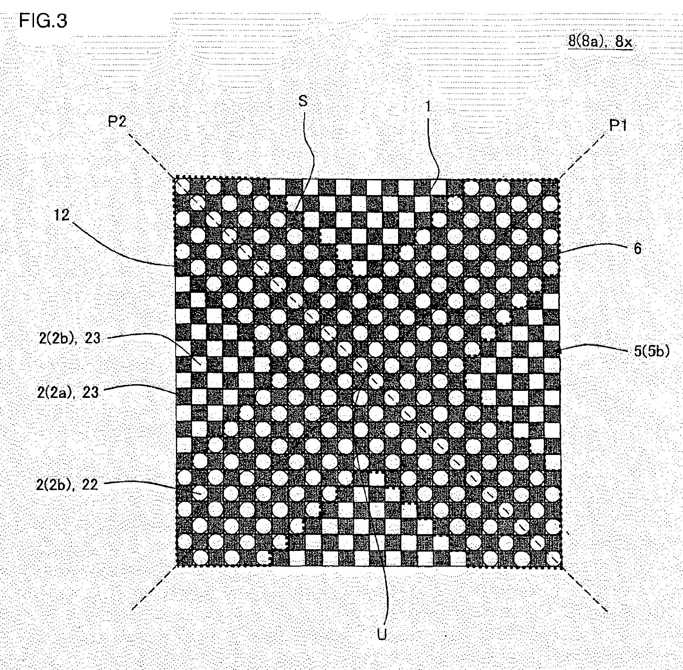

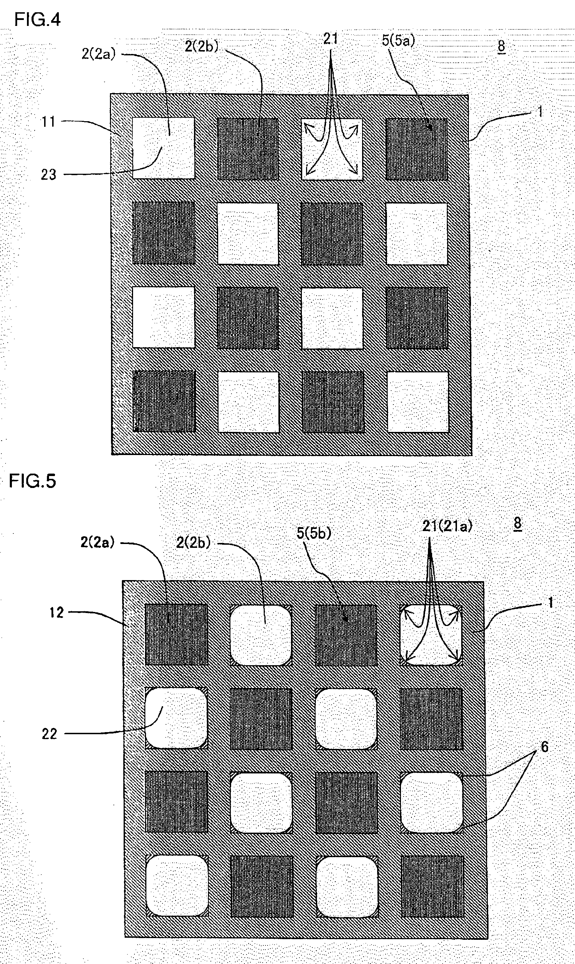

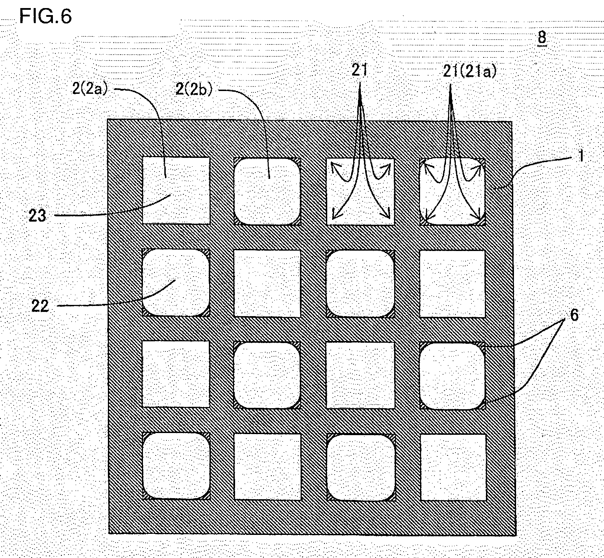

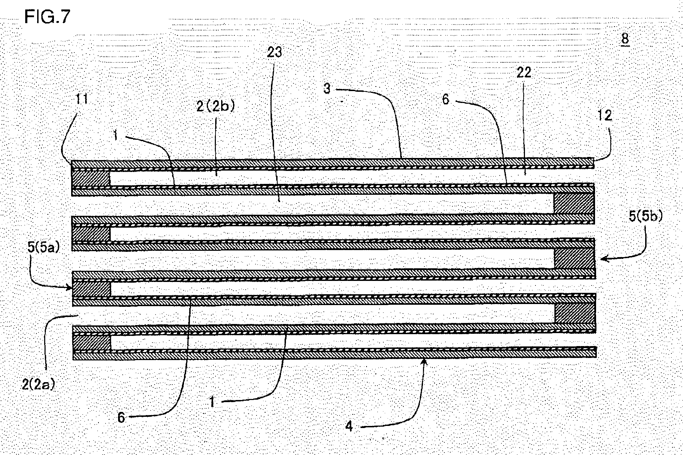

Here, Fig. 1 is a perspective view schematically showing one embodiment of a plugged honeycomb structure of the present invention. Fig. 2 is a schematic view showing an outflow side end face of one embodiment of a plugged honeycomb structure of the present invention. Fig.3 is a schematic view showing an enlarged outflow side end face of a honeycomb segment used in one embodiment of a plugged honeycomb structure of the present invention. Fig. 4 is a schematic view showing an enlarged inflow side end face of a honeycomb segment used in one embodiment of a plugged honeycomb structure of the present invention. Fig. 5 is a schematic view showing an enlarged outflow side end face of a honeycomb segment used in one embodiment of a plugged honeycomb structure of the present invention. Fig. 6 is a schematic view showing an enlarged part of a cross section perpendicular to the cell extension direction of a honeycomb segment used in one embodiment of a plugged honeycomb structure of the present invention. Fig. 7 is a schematic view showing a cross section parallel to the cell extension direction of a honeycomb segment used in one embodiment of a plugged honeycomb structure of the present invention.

Incidentally, Fig. 3 is a schematic view showing a honeycomb segment8 which is a complete segment 8a and reinforced segment 8x among the plural honeycomb segments 8. In addition, Figs. 4 to 6 are schematic views each showing the enlarged inside of the diagonal line region S of the honeycomb segment 8 (reinforced segment 8x) shown in Fig. 3. Fig. 7 is a schematic view showing an enlarged cross section in the diagonal line region S of the honeycomb segment 8 (reinforced segment 8x) shown in Fig. 3.

The complete segment 8a preferably has porous partition walls 1 separating and forming the plural cells 2 extending from the inflow side end face 11 to the outflow side end face 12 and the outer peripheral wall 7 disposed so as to surround the partition walls 1. The incomplete segment 8b preferably has porous partition walls 1 separating and forming the plural cells 2 extending from the inflow side end face 11 to the outflow side end face 12 and the outer peripheral wall 7 disposed in at least the outer peripheral portion brought into contact with adjacent other honeycomb segments.

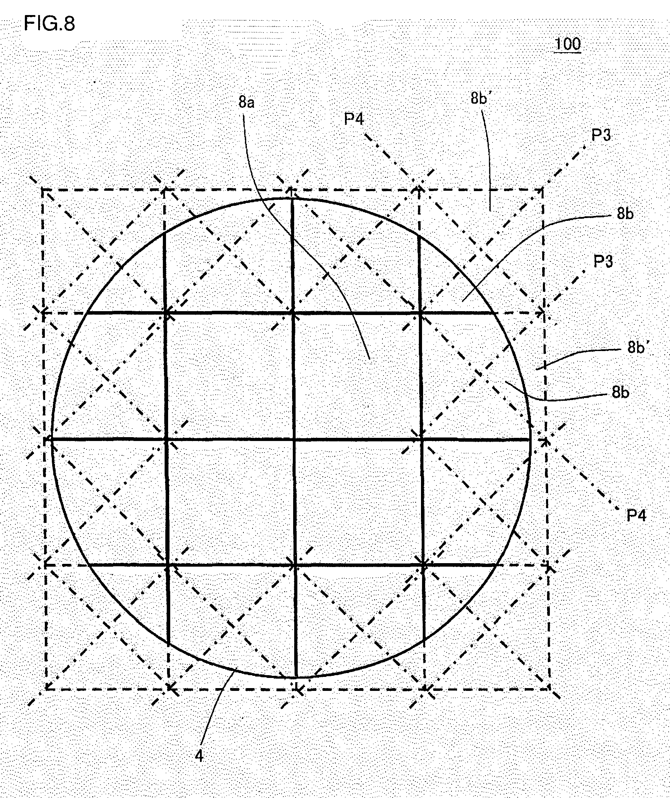

The "diagonal lines P1, P2 in a quadrangular cross section of a honeycomb segment 8" mean, as shown in Fig. 3, the diagonal lines P1, P2 of the quadrangular cross section in the complete segment 8a where the shape of a cross section (or an end face) perpendicular to the cell 2 extension direction is quadrangular. On the other hand, in the case of the incomplete segment 8b, as shown in Fig. 8, the "diagonal lines P1, P2 in a quadrangular cross section of a honeycomb segment 8" mean the diagonal lines P3, P4 of a cross section perpendicular to the cell extension direction of a supposed quadrangular columnar segment (hereinbelow sometimes referred to as a "virtual segment 8b' ") before a part of the periphery of the incomplete segment 8b is cut off. Incidentally, upon supposing the virtual segment 8b', the length of a side of a cross section (virtual cross section) of the virtual segment 8b' is made to be the same as the length of a side of a cross section of the complete segment 8a present in a position having the shortest distance from the virtual segment 8b' (in other words, the target incomplete segment 3b to be supposed). Here, Fig. 8 is a schematic view showing the outflow side end face of an embodiment of a plugged honeycomb structure of the present invention. In Fig. 8 is shown a state where the partition walls and cells of each of the honeycomb segments (complete segment 8a, and incomplete segment 8b) are abstracted.

The "incomplete segment constituting the outer peripheral portion of a honeycomb structure" is a honeycomb segment having a shape where a part of the periphery of the complete segment (virtual segment) is cut off according to the outer peripheral shape of a honeycomb structure used for the plugged honeycomb structure of the present embodiment in the case that the aforementioned "virtual segment" is a complete segment.

In a plugged honeycomb structure of the present embodiment, it is preferable that all the complete segments have the same cross-sectional shape. In the case that all the complete segments have the same cross-sectional shape, the cross-sectional shape of the virtual segment supposed from the incomplete segment is also the same as the cross-sectional shape of the aforementioned complete segment.

The "cells present on the diagonal lines in a quadrangle cross section of the honeycomb segment" mean cells present in positions where the cell openings overlap the diagonal line when two diagonal lines are drawn on the quadrangular cross section. It is preferable that the partition walls of the honeycomb segments are formed in a lattice pattern so as to be parallel to a side face of the quadrangular column of the complete segment or the virtual segment.

The "adjacent cell across a partition wall" means an adjacent cell across a partition wall constituting a side of the one cell with respect to one cell. That is, a cell adjacent in columns or in rows among the cells arranged in a lattice pattern is called "adjacent cell across a partition wall". Therefore, for example, among the quadrangular cells arranged in a lattice pattern, the cell disposed in a direction of a diagonal line of a quadrangle is not the "adjacent cell across the partition wall", but the "cell adjacent to the adjacent cell across a partition wall (i.e., cell across two partition walls)".

The "5 cells adjacent to one another in series across the partition walls from the cells present on the diagonal lines" mean all the cells from the aforementioned "cells present on the diagonal lines" to the cell across 5 partition walls in the case that the adjacent cell across a partition wall constituting a side of the cells present on the diagonal line is determined as the first adjacent cell. The "5 cells adjacent to one another in series across the partition walls from the cells present on the diagonal lines" include "adjacent first to fourth cells".

As shown in Fig. 3, the region (diagonal line region S) composed of the cells 2 present on diagonal lines P1, P2 in the quadrangle cross section of the honeycomb segment 8 (reinforced segment 8x) and 5 cells adjacent to one another in series across the partition walls 1 from the cells 2 present on the diagonal lines P1, P2 is the region where the outflow cells 2b can function as the reinforced cells 22. That is, in the region other than the diagonal line region S, no reinforcing portion 6 is formed in a corner where partition walls 1 intersect one another even in the outflow cells 2b. Even if a reinforcing portion is formed in a cell outside the aforementioned diagonal line region S, the effect of reinforcing the plugged honeycomb structure is not enhanced dramatically, and, in reverse, it becomes unfavorable in point of increase in pressure loss.

In addition, the cell having the reinforcing portion 6 formed therein is only the inflow cells 2b in the diagonal line region S of the reinforced segment 8x. That is, the inflow cells 2a have no reinforcing portion regardless of the diagonal line region S. This configuration enables to inhibit the increase in pressure loss in an extremely good manner.

The outflow cell 2b present in the intersection portion U of the diagonal lines P1, P2 or the outflow cell 2b present at a position having the shortest distance from the intersection portion U among the outflow cells 2b in the diagonal line region S of the reinforced segment 8x needs to be a reinforced cell 22 . This enables to inhibit an end face crack generation effectively in the central portion of a cross section of the honeycomb segment.

The "outflow cell 2b present in the intersection portion U of the diagonal lines P1, P2" is a cell present at a position where the cell opening overlaps the intersection portion U of the diagonal lines P1, P2 . The "outflow cell 2b present at a position having the shortest distance from the intersection portion U" means an outflow cell 2b present at a position having the shortest distance from the intersection portion U of the diagonal lines P1, P2 in a cross section of a honeycomb segment in such a case that no cell opening is present but partition walls are present on the intersection of the diagonal lines P1, P2. For example, in the case that the intersection U of the diagonal lines P1, P2 is located in the central portion of four cells disposed in a lattice pattern, the "cells 2 present at a position having the shortest distance from the intersection portion U" are the aforementioned four cells 2. In the case that at least one outflow cell 2b is present among the four cells, the at least one outflow cell 2b functions as the "outflow cell 2 present at a position having the shortest distance from the intersection portion U". In addition, the "outflow cell 2b present in the intersection portion U of the diagonal lines 21, P2" is naturally the "outflow cell 2b present at a position having the shortest distance from the intersection portion U". Hereinbelow, the "outflow cell 2b present in the intersection portion U of the diagonal lines P1, P2 or the outflow cell 2b present at a position having the shortest distance from the intersection portion U" is sometimes referred to as a "diagonal line intersection outflow cell".

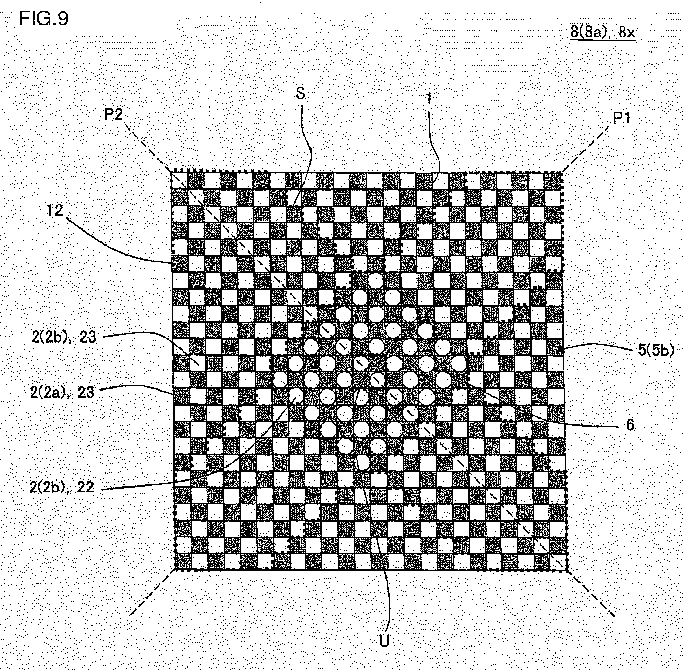

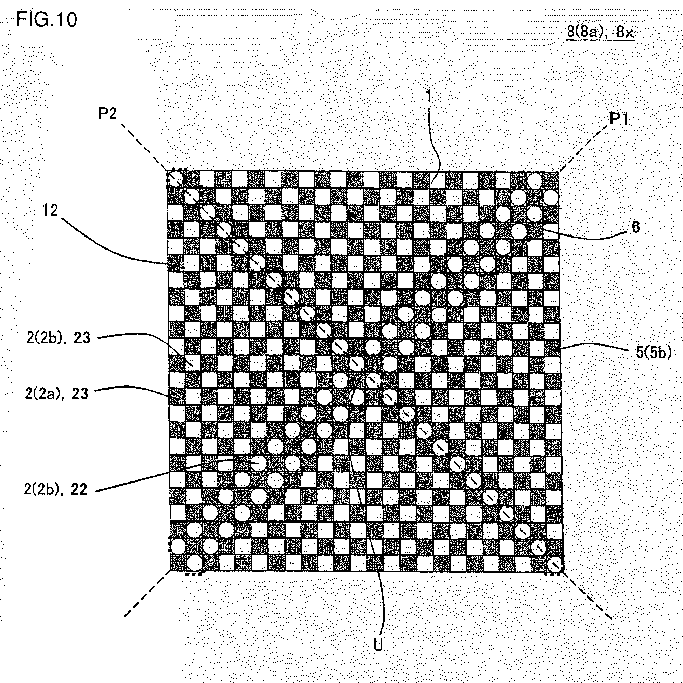

The outflow cells other than the diagonal line intersection outflow cell in the diagonal line region S may be a reinforced cell or an unreinforced cell. For example, Fig. 3 shows an example of the case where the reinforcing portion 6 is formed in all the outflow cells 2b in the diagonal line region S. As shown in Fig. 9, the reinforcing portion 6 may be formed in both the outflow cell 2b present at the intersection U. of the diagonal lines P1, P2 and the outflow cells 2b among the adjacent five cells 2 across the partition wall 1 from the outflow cell 2b present at the intersection U. Further, as shown in Fig. 10, the reinforcing portion 6 may be formed in all the outflow cells 2b present on the diagonal lines P1, P2 on the cross section of the honeycomb segment 8. The outflow cells where the reinforcing portions are to be formed can suitably be determined in consideration of the pressure loss increase inhibition effect and the durability improvement effect according to the use of the plugged honeycomb structure, the material for the partition walls constituting the honeycomb segments, and the like. Forming the reinforcing portions in all the outflow cells present on the diagonal lines can effectively inhibit the end face crack generation in the diagonal line directions from the central portion of a cross section of the honeycomb segment. Further, forming the reinforcing portions in all the outflow cells in the diagonal line region can improve durability in an extremely good manner. Here, Fig. 9 is a schematic view showing an enlarged outflow side end face of a honeycomb segment used in another embodiment of a plugged honeycomb structure of the present invention. Fig. 10 is a schematic view showing an enlarged outflow side end face of a honeycomb segment used in still another embodiment of a plugged honeycomb structure of the present invention.

As show in Fig. 2, in the plugged honeycomb structure 100 of the present embodiment, the reinforced honeycomb segment 8x where the outflow cells 2b in the diagonal line region S are reinforced has to be the honeycomb segment 8 including the centroid O of the cross section of the honeycomb structure 4 or being present at the position having the shortest distance from the centroid O in the cross section perpendicular to the cell 2 extension direction of the honeycomb structure 4. That is, in the case that the honeycomb segment 8 is present at the centroid O of the cross section of the honeycomb structure 4, the honeycomb segment 8 functions as the reinforced segment 8x. On the other hand, in the case that no honeycomb segment 8 is present at the centroid O of a cross section of the honeycomb structure 4 and, for example, that a bonding layer for bonding the corresponding side faces of two honeycomb segments 8 is present, the honeycomb segment 8 present at a position having the shortest distance from the centroid O of a cross section of a honeycomb structure 4 functions as the reinforced segment 8x. For example, as shown in Fig. 2, in the case that the centroid O of a cross section of the honeycomb structure 4 is present in the center of a portion where four honeycomb segments 8 are bonded, the four honeycomb segments 8 are the reinforced segments 8x. The honeycomb segment 8x including the centroid O of a cross section of the honeycomb structure 4 is the aforementioned honeycomb segment 8 present at a position having the shortest distance from the centroid O of the cross section.

In a plugged honeycomb structure of the present embodiment, all the complete segments 8a may be at least the reinforced segments 6x. In addition, all the honeycomb segments 8 constituting the honeycomb structure 4 may be the reinforced segments 6x. To allow only the honeycomb segment close to the centroid O to function as a reinforced segment has an effect in effectively inhibiting the increase of pressure loss and the end face crack generation in the central portion in addition to the aforementioned effect. On the other hand, for example, to allow all the complete segments 8a to function as reinforced segments has an effect in effectively inhibiting the end face crack generation in the honeycomb segments 8 adjacent to the segment in the central portion and further has an effect in effectively inhibiting the end face crack generation in the outer peripheral portion in addition to the aforementioned effect.

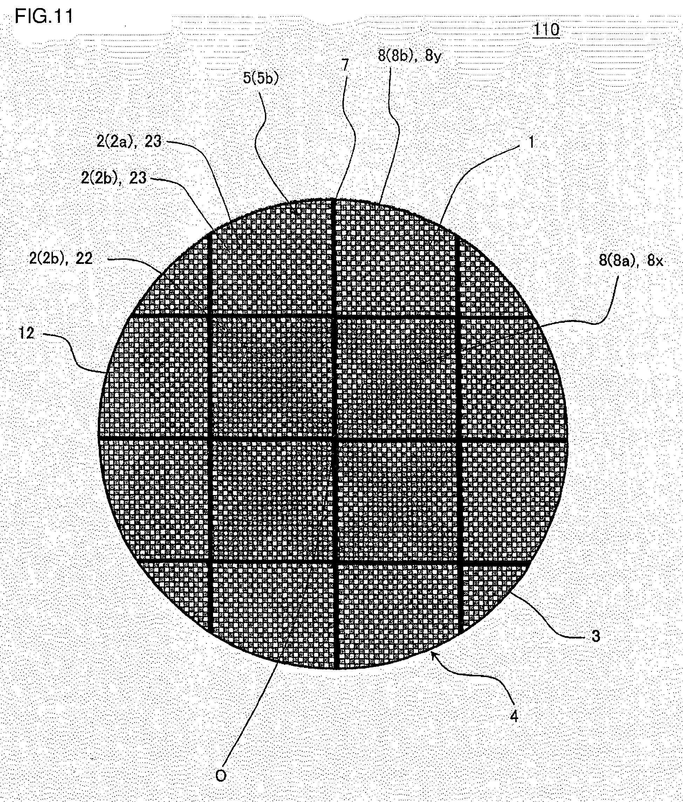

Fig. 2 shows an example of a plugged honeycomb structure 100 where all the 16 honeycomb segments 8 are reinforced segments 8x. For example, as shown in Fig. 11, four complete segments 8a among the 16 honeycomb segments 8 are arranged in a "2×2" manner. The four complete segments 8a may be the reinforced segments 8x. The incomplete segments 8b constituting the outer peripheral portion of the honeycomb structure 4 are unreinforced segments 8y. Here, Fig. 11 is a schematic view showing an outflow side end face of still another embodiment of a plugged honeycomb structure of the present invention.

The "reinforcing portion" means a portion disposed in a corner portion where partition walls separating and forming the cells intersect one another to reinforce the strength (durability) of the partition walls, which are substantial portions of the honeycomb segment. For example, the "reinforcing portion" may be of another member (e.g., a reinforcing member of a depressed portion or a beam) separately disposed in a corner portion where partition walls intersect one another in order to reinforce the corner portion. In addition, the "reinforcing portion" may be a portion where the corner portion where the partition walls intersect one another is formed thickly to have an R shape, C shape, or the like differently from the other corner portions (e.g., a corner portion of an unreinforced cell or a corner portion having no reinforcing portion even in a reinforced cell.

In the case that the reinforcing portion is of another member separately disposed for reinforcing a corner portion, a reinforcing portion having an arbitrary shape can be disposed in a predetermined corner portion in the manufacturing of the honeycomb segment. Therefore, regardless of the shape of the die for forming the honeycomb segment, various reinforcing cells can be realized. On the other hand, in the case that the reinforcing portion is made of a corner portion formed thickly, the reinforcing portion can be formed in a predetermined outflow cell (reinforced cell) upon manufacturing the honeycomb structure (more specifically, upon forming the honeycomb formed body) . Thus, the reinforcing portion can be formed very simply.

The "reinforced cell" is a cell where at least one corner portion among the corner portions formed in the outer peripheral portion of the cell is reinforced by the aforementioned "reinforcing portion". That is, the "reinforced cell" may contain a reinforced corner portion where a reinforcing portion is formed and an unreinforced corner portion where no reinforcing portion is formed. In addition, in the "reinforced cell", the reinforcing portions may be formed in all the corner portions in the reinforced cell (i.e., may have all the corner portions as the reinforced corner portions).

For example, the reinforced cell having both the reinforced corner portion and the unreinforced corner portion can inhibit the decrease of the capacity of the outflow cells, and increase in pressure loss can further be inhibited. On the other hand, the reinforced cell having all the corner portions as the reinforced corner portions can improve durability of the plugged honeycomb structure in a good manner. In the case that all the corner portions are reinforced corner portions among the reinforced cells, durability can be improved in a better manner.

Though there is no particular limitation on the shape of the honeycomb structure 4 in the plugged honeycomb structure 100 of the present embodiment, preferred are a cylindrical shape, a tubular shape having an elliptic end face, a prismatic columnar shape having a polygonal end face such as "a square, a rectangle, a triangle, a pentagon, a hexagon, and an octagon", and the like. Fig. 1 shows an example where the honeycomb structure 4 is cylindrical. The honeycomb structure 4 shown in Fig. 1 has the outer peripheral wall 3. It is preferable that the outer peripheral wall 3 of the honeycomb structure 4 is formed by applying a ceramic material to the outer periphery of the bonded body where a plurality of honeycomb segments 8 are bonded in a state that corresponding side faces of the segments 8 face each other.

The shape of the honeycomb segments 8 constituting the honeycomb structure 4 is different between the complete segment and the incomplete segment. The shape of the complete segment is a quadrangular column where the shape of a cross section perpendicular to the cell extension direction is quadrangular. Incidentally, the shape of the cross section is preferably square. On the other hand, the shape of the incomplete segment is a column having an arc portion corresponding to the outer peripheral shape of the honeycomb structure. In the plugged honeycomb structure of the present embodiment, as long as at least one honeycomb segment among the plural honeycomb segments constituting the honeycomb structure is the reinforced segment described above, there may be employed a configuration according a honeycomb structure having a conventionally known segment structure regarding the configuration of the bonding layers for bonding the honeycomb segments and the outer peripheral wall of the honeycomb structure.

There is no particular limitation on the number of honeycomb segments constituting the honeycomb structure. For example, in a plugged honeycomb structure 100 shown in Fig. 2, four complete segments 8a are in a state of "2×2" arrangement. The 12 honeycomb segments 8 located in the outer periphery (outer periphery in a cross section perpendicular to the cell extension direction) of the four complete segments 8a are the incomplete segments 8b. The outermost periphery of the honeycomb structure 4 is formed by the 12 incomplete segments 8b.

The "inflow cell" is a cell having an outflow side plugging portion at the opening of the cell on the outflow side end face. A fluid such as exhaust gas flows in from the opening on the inflow side end face of the inflow cell. On the other hand, the "outflow cell" is a cell having an inflow side plugging portion at the opening of the cell on the inflow side end face. A fluid such as exhaust gas cannot flow into the outflow cells directly, and the fluid having flown into the inflow cells passes through the partition walls, flows into the outflow cells, and is discharged from the openings on the outflow side end faces of the outflow cells. When the fluid moves from the inflow cells to the outflow cells, particulate matter in the fluid is trapped by the porous partition walls.

There is no particular limitation on the disposition of the inflow cells and the outflow cells, in other words, disposition of the outflow side plugging portions and the inflow side plugging portions. However, it is preferable that the inflow cells and the outflow cells are disposed alternately across the partition walls form the view point of trapping the particulate matter in the fluid by partition walls in a good manner. A part of the inflow cells or a part of the outflow cells may be assembled in one portion of an end face of the honeycomb structure.

There is no particular limitation on the cell shape (shape of opening in a cross section perpendicular to the cell extension direction), and examples of the shape include a triangle, a quadrangle, a hexagon, and an octagon. In the case of a quadrangle, a square or a rectangle is preferable, and a square is more preferable. The aforementioned cell shape means a shape in the state where the reinforcing portion is removed regarding the cell having a reinforcing portion formed therein. Further, in the plugged honeycomb structure of the present embodiment, the opening shape (hereinbelow sometimes simply referred to the "opening shape of the inflow cell") in the cross section perpendicular to the cell extension direction of the inflow cell and the opening shape ((hereinbelow sometimes simply referred to the "opening shape of the outflow cell") of the outflow cells where the reinforcing portion is removed in the cross section perpendicular to the cell extension direction may be the same or different from each other.

In a plugged honeycomb structure of the present embodiment, the thickness of the partition wall constituting the honeycomb segment in a cross section perpendicular to the cell extension direction (hereinbelow sometimes simply referred to as the "thickness of the partition walls") is basically uniform. "Basically uniform" means that the thickness of the partition walls is uniform except for the case of having slight variance in thickness due to deformation or the like upon forming. That is, in a honeycomb segment of the plugged honeycomb structure of the present embodiment, no variance in partition wall thickness is caused intentionally, and the thickness of the partition walls in the aforementioned cross section is uniform. For example, in the case of producing slits of a die for extruding a honeycomb segment by slicer-machining, the aforementioned partition walls having uniform thickness are realized. In the plugged honeycomb structure of the present embodiment, the portion where a part (particularly, corner portion) of the partition walls is formed thickly in comparison with the other portions in the partition walls supposedly having uniform thickness can be regarded as the portion where a reinforcing portion is formed.

The thickness of the partition walls is preferably 100 to 600 µm, more preferably 110 to 560 µm, particularly preferably 280 to 420 µm. When it is smaller than 100 µm, strength of the plugged honeycomb structure may be low. When it is larger than 600 µm, the initial pressure loss of the plugged honeycomb structure may be high. The partition walls of the honeycomb segment are preferably formed to have the same thickness in a plurality of honeycomb segments constituting a honeycomb structure.

The porosity of the partition walls is preferably 30 to 85%, more preferably 35 to 70%, particularly preferably 40 to 65%. When the porosity is below 30%, the initial pressure loss of the plugged honeycomb structure may be high. When the porosity is above 85%, the strength of the plugged honeycomb structure may be low. The porosity is measured by a mercury porosimeter. It is preferable that the partition walls of the honeycomb segments are formed to have the same porosity in the plural honeycomb segments constituting a honeycomb structure.

The average pore size of the partition walls is preferably 5 to 40 µm, more preferably 10 to 25 µm, particularly preferably 13 to 23 µm. When the average pore size is smaller than 5 µm, the initial pressure loss of the plugged honeycomb structure may be high. When the average pore size is larger than 40 µm, the strength of the plugged honeycomb structure may be low. The average pore size is measured by a mercury porosimeter. It is preferable that the partition walls of the honeycomb segments are formed to have the same average pore diameter in the plural honeycomb segments constituting a honeycomb structure.

Though there is no particular limitation on the cell density of the honeycomb structure, it is preferably 10 to 70 cells/cm², more preferably 15 to 50 cells/cm². When the cell density is below 10 cells/cm², the strength of the plugged honeycomb structure may be low. When the cell density is above 70 cells/cm², the pressure loss may be high because the cross sectional area of the cells (area of a cross section perpendicular to the cell extension direction) becomes small. It is preferable that the plural honeycomb segments constituting a honeycomb structure has the same cell density.

There is no particular limitation on the size of a cross section of a honeycomb segment. Also, there is no particular limitation on the number of cells formed in a honeycomb segment. For example, the number of cells in each of the vertical direction and the horizontal direction of a quadrangular cross section of a honeycomb segment is preferably 5 to 40, more preferably 10 to 30, and particularly preferably 16 to 28. When the number of cells in each of the vertical direction and the horizontal direction of a quadrangular cross section of a honeycomb segment is below 5, pressure loss may be high. When it is above 40, strength of the plugged honeycomb segment bonded body may be low. Incidentally, the number of cells in the vertical and horizontal directions of a quadrangular cross section of a honeycomb segment means the number of cells in the case that the direction parallel to one side of the quadrangular cross section is determined as the vertical direction and that the direction parallel to another side crossing the above side at right angles is determined as the horizontal direction.

As the material for the partition walls, ceramic is preferable. Because of excellent strength and thermal resistance, further preferred is at least one selected from the group consisting of silicon carbide, silicon-silicon carbide based composite material, cordierite, mullite, alumina, aluminum titanate, silicon nitride, and silicon carbide-cordierite based composite material. Of these, silicon carbide is particularly preferable.

Though there is no particular limitation on the material for the reinforcing portion, ceramic is preferable, and the above materials mentioned as preferable materials for the partition walls may suitably be used. In the plugged honeycomb structure of the present embodiment, it is preferable that the thermal expansion coefficient of the partition walls is the same as or close to the thermal expansion coefficient of the reinforcing portion. It is more preferable that the material for the reinforcing portion is the same as the material for the partition wall. Such a configuration enables to inhibit peeling of the reinforcing portion from the honeycomb structure (honeycomb segment) or breakage of the bonding portion between the reinforcing portion and the partition wall even if thermal stress is applied to the plugged honeycomb structure. Incidentally, in the case that the reinforcing portion is formed unitarily with the partition walls, the material for the reinforcing portion is the same as the material for the partition walls.

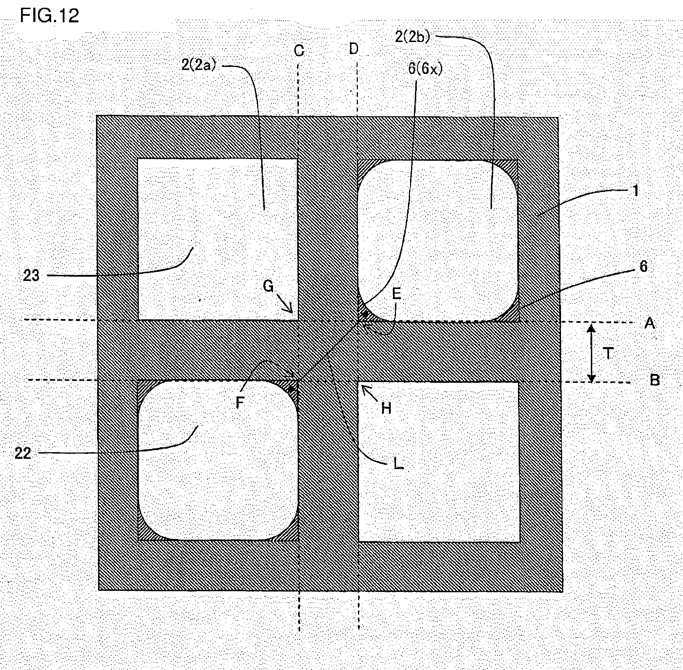

There is no particular limitation on the size of the reinforcing portion as long as the reinforcing portion has a size where it is disposed in at least one corner portion of partition walls separating and forming an outflow cell and does not completely cover the opening portion of the outflow cell substantially. However, if the opening portion of the outflow cell is largely covered by the reinforcing portion, the pressure loss is increased. Therefore, as shown in Fig. 12, in the plugged honeycomb structure of the present embodiment, the ratio (L/T) of the "intersection distance L in the partition wall intersection portion from the surface of the reinforcing portion 6 of the reinforced cell 22 (outflow cell 2b) to the surface of another cell disposed across the intersection of the partition walls 1 separating and forming the reinforced cell 22" with respect to the "average thickness T (hereinbelow sometimes referred to as the "average thickness T of the partition walls 1") of the partition walls 1 excluding the reinforcing portion 6" is preferably 1.5 to 9.3. Such a configuration enables to realize the inhibition of increase in pressure loss and the improvement in durability in a balanced manner. Fig. 12 is a schematic view showing an enlarged cross section perpendicular to the cell extension direction of one embodiment of a plugged honeycomb structure of the present invention.

Here, the ratio (L/T) of the "intersection distance L in the partition wall intersection portion from the surface of the reinforcing portion 6 of the reinforced cell 22 to the surface of another cell disposed across the intersection of the partition walls 1 separating and forming the reinforced cell 22" with respect to the "average thickness T of the partition walls 1 excluding the reinforcing portion 6 (hereinbelow sometimes referred to as the "average thickness T of the partition walls 1") " will be described. As shown in Fig. 12, in the first place, the parallel lines A,B, C, and D are drawn along the partition walls 1 of portions where no reinforcing portion 6 is formed, and the average distance between the lines is determined as the "average thickness T of the partition walls 1". In addition, the intersection points of the parallel lines A, B, C, and D are determined as E, F, G, and H. Here, the length of the distance between two cells, the length being measured so as to pass both the intersection point (intersection point E) closest to the target reinforcing portion 6x and the intersection point (intersection point F) closest to another cell (another cell is also a reinforced cell 22 in Fig. 12) disposed across the intersection point of the partition walls 1, is determined as the "intersection distance L in the partition wall intersection portion". The value obtained by dividing the value of the "intersection distance L in the partition wall intersection portion" measured by the aforementioned method by the value of the "average thickness T of the partition walls 1" is the aforementioned "ratio (L/T)".

Fig. 12 shows the case where both the targeted reinforced cell 22 having the reinforcing portion 6x and another cell disposed across the intersection point of the partition walls 1 are the reinforced cells 22. However, for example, there is a case where another cell disposed across the intersection point of the partition walls 1 is an unreinforced cell 23 or a case where even the reinforced cell 22 does not have a reinforcing portion in the corner portion of the partition walls though which depends on the disposition of the reinforcing portion 6x. Even in such cases, the "ratio (L/T)" can be obtained by the aforementioned method. The measurement of the aforementioned "ratio (L/T) " can be conducted with an optical microscope.

When the ratio (L/T) of "intersection distance L in the partition wall intersection portion" with respect to "average thickness T of the partition walls 1" is below 1.5, it may be impossible to obtain the effect in improving the durability by the reinforcing portion sufficiently. On the other hand, when the ratio (L/T) of "intersection distance L in the partition wall intersection portion" with respect to "average thickness T of the partition walls 1" is above 9.3, the opening area of the reinforced cell 22 is reduced too much, which may excessively increase pressure loss. In addition, even if the ratio is above 9.3, the durability may hardly be improved further, and therefore the ratio of increase in pressure loss may be raised. The aforementioned ratio (L/T) is more preferably 1.6 to 5.0, particularly preferably 1.7 to 2.7.

Incidentally, in the unreinforced cells in the honeycomb structure of the present embodiment, no reinforcing portion is formed in the corners where the partition walls intersect one another. However, even the unreinforced cell where no reinforcing portion is formed intentionally may have a very slightly thick portion in the corner having no reinforcing portion due to abrasion or the like of a die for extruding the honeycomb structure. Therefore, in the honeycomb structure of the present embodiment, regarding the case that the aforementioned ratio (L/T) is below 1.5, no reinforcing portion is considered to be formed in the corner. For example, in the case that no reinforcing portion is formed in a corner portion at all in a cell having a square opening portion shape and that no unintended thick portion is formed, the ratio (L/T) is 1.41.

Each of the reinforcing portions (one reinforcing portion) preferably has a size covering 0.05 to 20% of the area of the opening portion where the reinforcing portion is removed in a cross section perpendicular to the cell extension direction. When the area covered by the reinforcing portion is below 0.05% of the area of the opening portion, the reinforcing effect by the reinforcing portion may be exhibited insufficiently. In addition, when the area covered by the reinforcing portion is above 20% of the area of the opening portion, for example, in the case that the reinforcing portion is formed in all the four corner portions of the square cell, the opening area of the reinforced cell becomes too small, and it may increase the pressure loss of the plugged honeycomb structure. The size of each reinforcing portion is the size where more preferably 0.1 to 12%, particularly preferably 0.4 to 5%, of the area of the opening portion where the reinforcing portion is removed in a cross section perpendicular to the cell extension direction is covered.

The reinforcing portion may be formed in the entire region from the inflow side end face to the outflow side end face of the reinforced cell or may be formed in a part of the longitudinal direction (cell extension direction) of the honeycomb structure (honeycomb segment) from the inflow side end face of the reinforced cell. For example, in the case that the reinforcing portion is formed over the entire region from the inflow side end face to the outflow side end face of the reinforced cell, the durability of the plugged honeycomb structure in the entirely longitudinal direction can be improved in a good manner. On the other hand, in the case that the reinforcing portion is formed in a part of the honeycomb structure in the longitudinal direction, while improving the durability on the outflow side end face, the capacity of the outflow cells is improved to be able to inhibit the increase of the pressure loss by increasing the outflow cell capacity.

In the plugged honeycomb structure of the present embodiment, it is preferable that a bonding portion is disposed between adj acent honeycomb segments to bond the honeycomb segments with the bonding portion. The bonding portion is preferably disposed over the entire side faces facing each other of the adjacent honeycomb segments. The bonding portion plays a role of a buffer member when load is applied to the honeycomb structure. An example of preferable material for the bonding portion is prepared by adding additives such as an organic binder, a resin balloon, and a dispersant to an inorganic raw material such as inorganic fibers, colloidal silica, clay, and SiC particles, and then adding water, followed by kneading. The thickness of the bonding portion is preferably 0.2 to 2.0 mm, more preferably 0.5 to 1.5 mm. When it is thinner than 0.2 mm, adjacent honeycomb segments may be brought into contact with each other. When it is thicker than 2.0 mm, pressure loss upon purifying exhaust gas may become high.

### (2) Method for manufacturing plugged honeycomb structure:

The method for manufacturing the plugged honey comb structure of the present embodiment will be described. In the first place, kneaded material for manufacturing a honeycomb segment is prepared, and the kneaded material is formed to manufacture a plurality of honeycomb segment formed bodies (forming step). The honeycomb segment formed body has a columnar shape where a cross section perpendicular to the cell extension direction of the honeycomb segment is quadrangular.

In the case of forming a reinforced segment as the honeycomb segment, a reinforcing portion may be formed in the corner portion of the predetermined cell to function as the outflow cell among the cells of the honeycomb segment. That is, a reinforcing portion for reinforcing the outflow cells may be formed in at least one corner portion of the cells to function as outflow cells among the cells present on diagonal lines in the quadrangle cross section of the honeycomb segment and 5 cells adjacent to one another in series across the partition walls from the cells present on the diagonal lines. At this time, a reinforcing portion is formed in the outflow cell present in the intersection portion of the diagonal lines or the outflow cell present at a position having the shortest distance from the intersection portion among the outflow cells in the aforementioned diagonal line region.

It is also possible that the reinforcing portion may be formed in one of the honeycomb segment formed body, dried body obtained by drying the honeycomb segment formed body, and honeycomb segment obtained by firing the honeycomb segment dried body after the honeycomb segment formed body is obtained without forming the reinforcing portion in a cell upon forming. The specific method will be described in more detail in each step described later.

In addition, at the time of manufacturing a honeycomb segment formed body, it is preferable to determine the inflow side end face and the outflow side end face for using it as a plugged honeycomb structure. That is, in the plugged honeycomb structure of the present embodiment, since the cell shape (i.e., present/absent of the reinforcing portion) is different between the inflow side end face and the outflow side end face (in other wards, between the inflow cell and the outflow cell), it is preferable to determine the direction of the columnar honeycomb segment in advance.

Next, the honeycomb segment formed body (or the honeycomb segment dried body after drying performed as necessary) obtained above is fired to manufacture a honeycomb segment (honeycomb segment manufacturing step) . In the case that no reinforcing portion is formed in the forming step, a reinforcing portion is formed in at least a part of cells to serve as the outflow cells before or after the firing.

Next, plugging is performed in the opening portions of predetermined cells on the inflow side end face of each honeycomb segment obtained above and the opening portions of the remaining cells on the outflow side end face to form inflow side plugging portions and outflow side plugging portions (plugging step).

Next, the honeycomb segments obtained above are bonded with a bonding material to manufacture a honeycomb segment bonded body (plugged honeycomb structure) as shown in Fig. 1, where a plurality of honeycomb segments 8 are adjacently disposed in such a manner that corresponding side faces face each other and are bonded with the bonding material (honeycomb segment bonding step). The number of honeycomb segments to be bonded together is preferably according to the size of the honeycomb structure to be manufactured. The bonding material is preferably disposed over the entire side faces facing each other, that is, over the entire bonding faces. The bonding material plays a role of buffering the volume change upon thermal expansion or thermal shrinkage of the honeycomb segments and a role of bonding the honeycomb segments. Upon bonding a plurality of honeycomb segments, the honeycomb segment including the centroid of the cross section of the honeycomb structure or being present at the position having the shortest distance from the centroid in the cross section perpendicular to the cell extension direction of the honeycomb structure is at least the reinforced segment.

It is preferable that, after the bonded body is formed, an outer peripheral portion of the bonded body is cut off to have a desired shape. When the plugged honeycomb structure of the present embodiment is manufactured, it is preferable to cut the outer peripheral portion of the bonded body in such a manner that the shape in a cross section perpendicular to the cell extension direction becomes circular by cutting the honeycomb segments located in the outermost periphery.

It is preferable that, after the bonding body is formed, or after the outer periphery is further cut to have a desired shape, an outer periphery coating treatment is performed to arrange the outer peripheral portion in the outermost periphery of the bonded body to obtain a plugged honeycomb structure.

Thus, the plugged honeycomb structure of the present embodiment can be manufactured in this manner. Hereinbelow, each manufacturing step will be described in more detail.

### (2-1) Forming step:

In the first place, in the forming step, a ceramic forming raw material containing a ceramic raw material is formed to form a plurality of honeycomb segment formed bodies separating and forming a plurality of cells to function as fluid passages.

The ceramic raw material contained in the ceramic forming raw material preferably contains at least one kind selected from the group consisting of silicon carbide, silicon-silicon carbide composite material, cordierite-formingrawmaterial, cordierite, mullite, alumina, titania, and aluminum titanate, is more preferably at least one kind selected from the group consisting of silicon carbide, silicon-silicon carbide composite material, cordierite-forming raw material, cordierite, mullite, alumina, titania, and aluminum titanate, and is particularly preferably one kind selected from the group consisting of silicon carbide, silicon-silicon carbide composite material, cordierite-forming raw material, cordierite, mullite, alumina, titania, and aluminum titanate. The cordierite-forming raw material means a ceramic raw material blended to have a chemical composition of 42 to 56 mass% of silica, 30 to 45 mass% of alumina, and 12 to 16 mass% of magnesia and to form cordierite by firing.

It is preferable that the ceramic forming raw material is prepared by mixing a dispersion medium, an organic binder, an inorganic binder, a pore former, a surfactant, and the like to the aforementioned ceramic raw material. There is no particular limitation on the compounding ratio of the raw materials, and the compounding ratio is preferably according to the structure, material, and the like of the honeycomb structure to be manufactured.

When the ceramic forming raw material is formed, it is preferable that, in the first place, the forming raw material is kneaded to obtain a kneaded material, which is then formed into a honeycomb shape. There is not particular limitation on the method for forming the kneaded material by kneading the forming rawmaterial, and, for example, a method using a kneader, a vacuum kneader, or the like may be employed. There is no particular limitation on the method for forming a honeycomb formed body by forming the kneaded material, and a conventionally known forming method such as extrusion or injection may be employed. A suitable example is a method of forming a honeycomb formed body by extrusion using a die having a desired cell shape, partition wall thickness, and cell density. As the material for the die, a superhard alloy, which hardly abrades, is preferable.

The honeycomb segment formed body is a column where the shape of a cross section perpendicular to the cell extension direction of a honeycomb segment is quadrangular. That is, upon forming, it is preferable that all the honeycomb segments are complete segments where the shape of a cross section perpendicular to the cell extension direction of the honeycomb segment is square and that the outer peripheral portion of the bonded body obtained by bonding a plurality of honeycomb segments is cut as necessary to obtain a desired shape.

In the case of forming a reinforced segment as a honeycomb segment upon forming, the reinforcing portion may be formed in the cells in the diagonal line region of a honeycomb segment among the cells to function as outflow cells in the plugged honeycomb structure to be obtained. Specifically, a reinforcing portion for reinforcing a cell where a reinforcing portion is to be formed (cell to function as an outflow cell) is formed in at least one corner portion where partition walls intersect one another in a cross section perpendicular to the cell extension direction. Though there is no particular limitation on the method for forming a reinforcing portion, for example, it is preferable to use a die constituted so that the slit shape of the die for forming a honeycomb segment can selectively form the cell having a reinforcing portion (reinforced cell) and the cell having no reinforcing portion (unreinforced cell). Incidentally, in a reinforced segment, a reinforced portion is necessarily formed in a cell to function as the outflow cell present in the intersection portion of the diagonal lines or present at a position having the shortest distance from the intersection portion.

As the die capable of selectively forming a reinforced cell and an unreinforced cell, there can be mentioned a die having a die base having two faces, where honeycomb-shaped slits are formed in a lattice pattern on one face, while a back hole communicating with the slits is formed on the other face in order to introduce the forming raw material. It is preferable that, in this die, the vertex of at least one corner portion at the intersection point for forming an outflow cell from which a fluid flows out in the resultant honeycomb structure among the intersection points where the slits intersect one another is chamfered in a curved or planar manner. The use of such a die enables to selectively form a reinforcing portion in a desired cell upon forming the honeycomb segment. In addition, a depressed portion or a beam may be provided at the intersection point of the slits of the die so that the corner portion of the outflow cell can be reinforced.

After the forming, the honeycomb segment formed body may be dried. Though there is no particular limitation on the drying method, there may be mentioned, for example, hot air drying, microwave drying, dielectric drying, reduced pressure drying, vacuum drying, and freeze drying. Of these, dielectric drying, microwave drying, or hot air drying is preferably performed alone or in combination.

### (2-2) Honeycomb segment manufacturing step:

Next, it is preferable to obtain a honeycomb segment by firing the honeycomb segment formed body obtained above. The firing of the honeycomb segment formed body may be performed after disposing the plugging portions in the honeycomb segment formed body.

It is preferable to calcine the honeycomb segment formed body before firing (main firing) the honeycomb segment formed body. The calcination is for degreasing. There is no particular limitation on the calcination method as long as the organic substances (organic binder, dispersant, pore former, etc.) in the formed body can be removed. Since, generally, the combustion temperature of an organic binder is about 100 to 300°C, and the combustion temperature of a pore former is about 200 to 800°C, it is preferable to perform calcination by heating at about 200 to 1000°C for about 3 to 100 hours in an oxidation atmosphere.

The firing (main firing) of the honeycomb segment formed body is performed in order to secure predetermined strength by densifying by sintering the forming raw material constituting the calcined formed body. Since the firing conditions (temperature, time, and atmosphere) depend on the kind of the forming raw material, suitable conditions may be selected according to the kind. For example, in the case that a cordierite-forming raw material is used, the firing temperature is preferably 1410 to 1440°C. In addition, the firing period is preferably 4 to 6 hours as the highest temperature-keeping time.

In addition, in the case that no reinforcing portion is formed upon forming the honeycomb segment formed body, it is preferable to form a reinforcing portion by applying a reinforcing material having a depressed or beam-like shape to a corner portion of an outflow cell before and after firing.

Specifically, a reinforcing portion can be formed by a dipping method where a plugged honeycomb structure before or after firing is immersed in a slurried reinforcing material prepared in a container from the outflow side end face side. Alternatively, a reinforcing portion may be formed by a sucking method where the reinforcing material is sucked from the inflow side end face of the honeycomb segment in the state that the outflow side end face of the honeycomb segment is brought into contact with a similar slurried reinforcing material. Further, a reinforcing portion may be formed by an injection method where a similar slurried reinforcing material is injected from the outflow side end face of the honeycomb segment. At this time, in order to inhibit impregnation of the inflow cell side with the reinforcing material, it is preferable that the particle diameter of the reinforcing material components is adjusted to be larger than the average pore size of the partition walls of the honeycomb segment. In addition, in order to inhibit breakage of the reinforcing member or the honeycomb structure in practical use, it is preferable to adjust the thermal expansion coefficient of the reinforcing member to be equivalent to that of the honeycomb segment.

Thus, there can be obtained a honeycomb segment (reinforced segment) having a reinforcing portion in at least one corner portion where partition walls intersect one another in a cross section perpendicular to the cell extension direction of a specific cell to be an outflow cell. In addition, regarding a honeycomb segment (unreinforced segment) having no reinforcing potion, a honeycomb segment can be obtained by firing a honeycomb segment formed body without change.

### (2-3) Plugging step:

Next, a plugging material is filled in the opening portions of the outflow cells on the fluid inflow side end face and the opening portions of the inflow cells on the fluid outflow side end face of the honeycomb segment to form plugging portions in the opening portions of the outflow cells on the inflow side end face and the opening portions of the inflow cells on the outflow side end face.

Upon filling the plugging material into the honeycomb segment, in the first place, the plugging material is filled on one end portion side, and then the plugging material is filled on the other end portion side. As the method for filling the plugging material on one end side, there can be mentioned a method having a masking step where a sheet is applied on one end face (e.g., inflow side end face) of the honeycomb segment to make holes in positions corresponding to the "cells where the plugging portions are to be formed" and an injection step where the "end portion having the sheet applied thereon of the honeycomb segment" is inserted into the container containing the plugging material under pressure to inject the plugging material into the cells of the honeycomb segment. Upon injecting the plugging material into the cells of the honeycomb segment, the plugging material passes through the holes formed in the sheet and is filled only into the cells communicating with the holes.

The method for filling the plugging material on the other end portion (e.g., outflow side end face) side of the honeycomb segment is preferably the same as the aforementioned method for filling the plugging material on one end portion side of the honeycomb segment . In addition, the plugging material may be filled simultaneously in both the end portions of the honeycomb segment.

Next, it is preferable to obtain a plugged honeycomb segment by forming plugging portion by drying the plugging material filled into the honeycomb segment . Incidentally, the plugging material may be dried after the plugging material is filled in both the end portion of the honeycomb segment. Alternatively, after drying the plugging material filled in one end portion of the honeycomb segment, the plugging material may be filled in the other end portion and then dried. The plugging material may be fired for the purpose of securer fixation. It is also possible that the plugging material is filled in the honeycomb segment formed body before or after drying and then fired together with the honeycomb segment formed body before or after drying.

### (2-4) Honeycomb segment bonding step:

Next, the honeycomb segments obtained above are bonded together with a bonding material to manufacture a honeycomb segment bonded body (plugged honeycomb structure) where a plurality of honeycomb segments 8 as shown in Fig. 1 are adjacently disposed so that corresponding side faces face each other to be bonded with a bonding material as shown in Fig. 1.

Upon bonding a plurality of honeycomb segments, the honeycomb segment including the centroid of the cross section of the honeycomb structure or being present at the position having the shortest distance from the centroid in the cross section perpendicular to the cell extension direction of the honeycomb structure is at least the reinforced segment.

The honeycomb segments are preferably bonded with a bonding material. There is no particular limitation on the method for applying the bonding material on the side faces of the honeycomb segments, and a method such as brush coating may be employed.

An example of the bonding material is prepared by adding additives such as an organic binder, a resin balloon, and a dispersant to an inorganic raw material such as inorganic fibers, colloidal silica, clay, and SiC particles, and then adding water, followed by kneading.

The bonding material bonding the side faces of the honeycomb segments becomes as the bonding portions. The bonding portions are preferably disposed over the entire corresponding side faces of the honeycomb segments. The bonding portion plays a role of buffering (absorbing) the volume change due to thermal expansion or thermal shrinkage and a role of bonding the honeycomb segments.

After forming a bonded body, it is preferable to cut the outer peripheral portion to have a desired shape. In addition, it is preferable that, after the outer peripheral portion of a bonded body where the honeycomb segments have been bonded is cut, an outer peripheral wall is disposed in the outer peripheral portion of the honeycomb structure to manufacture a plugged honeycomb structure. The outer periphery coating has the advantage such as improvement of the roundness of the plugged honeycomb structure.

Such a configuration enables to manufacture the plugged honeycomb structure of the present embodiment. However, the method for manufacturing the plugged honeycomb structure of the present embodiment is not limited to the aforementioned manufacturing method.

### Example

Hereinbelow, the present invention will be described more specifically with Examples. However, the present invention is by no means limited to these Examples.

### (Example 1)

Honeycomb segments were manufactured by the use of silicon carbide (SiC) as the ceramic raw material, and 16 honeycomb segments were bonded to manufacture a honeycomb structure having a segment structure. Specifically, the ceramic forming raw material was obtained by mixing SiC powder and metal Si powder at a mass ratio of 80:20, and then mixing with the mixture methyl cellulose and hydroxypropoxymethyl cellulose as the binder, starch as the pore former, a water-absorbing resin, a surfactant, and water. The ceramic forming raw material obtained above was kneaded with a kneader to obtain kneaded material.

Next, the kneaded material was formed with a vacuum kneader to obtain 16 honeycomb segment formed bodies. The honeycomb segment formed bodies had a shape where the honeycomb segments after firing the honeycomb segment formed bodies might have a partition wall thickness of 0.305 mm, a density of 46.5 cells/cm², and a cell pitch of 1.47 mm. In addition, the entire shape of the honeycomb segment formed bodies (entire shape after firing) was a quadrangular column having square end faces (with a side of an end face of 36.6 mm and a length in the cell extension direction of 152.4 mm) .

In addition, as honeycomb segment forming bodies, four honeycomb segments were formed as reinforced segments. The four reinforced segments were employed as the four honeycomb segments present at a position having the shortest distance from the centroid. In the column of the "position of reinforced segment" in Fig. 1, they were shown as "central four". In the reinforced segments, a reinforcing portion was formed in a corner portion where partition walls intersect one another in two outflow cells (cells to function as outflow cells later) present in the intersection portion of two diagonal lines. It is shown as "intersection portion" in the column of the "position of reinforced cell" in Table 1.

In the outflow cells (reinforced cells) having reinforcing portions formed therein, the ratio (hereinbelow referred to as the "intersection ratio (L/T) of reinforced cell") of the "intersection distance L of the partition wall intersection portion from the surface of a reinforcing portion of a reinforced cell to the surface of another cell disposed across the intersection point of the partition walls separating and forming the reinforced cell" with respect to the "average thickness T of the partition walls excluding the reinforcing portions" was 2.200. The measurement of the intersection ratio was conducted with an optical microscope.

On the other hand, in the inflow cells and the outflow cells having no reinforcing portions formed therein, the ratio (hereinbelow referred to as the "intersection ratio (L/T) of unreinforced cell") of the "intersection distance L of the partition wall intersection portion from the surface of a cell having no reinforced cell to the surface of another cell disposed across the intersection point of the partition walls separating and forming this cell" with respect to the "average thickness T of the partition walls excluding the reinforcing portions" was 1.410. The intersection ratio (L/T) was measured according to the measurement method described above with referring to Fig. 12.

Next, a mask was applied on a part of the plural cell openings on the end faces (end faces on inflow and outflow sides) of each of the honeycomb segment formed bodies. At this time, cells having the mask and cells having no mask were alternately arranged. That is, the outflow cells and the inflow cells were alternately arranged across the partition walls. The end portion where the mask was applied was immersed in plugging slurry containing the cordierite-forming raw material to fill the plugging slurry in the openings of the cells having no mask. Thus, a plugged honeycomb segment formed body having plugging portions disposed in the openings of the outflow cells on the inflow side end face and the openings of the inflow cells on the outflow side end face was obtained.

Next, the plugged honeycomb formed body was degreased. Further, firing was performed at 1410 to 1440°C for 15 hours to obtain a honeycomb segment.

The 16 honeycomb segments obtained above were disposed to have 4 × 4 arrangement in a cross section perpendicular to the cell extension direction, bonded with a bonding material, and dried to obtain a bonded body. At this time, four honeycomb segments (located in the central portion), where the outermost periphery is not formed, were determined as the reinforced segments. The thickness of the bonding material after drying was 1.0 mm.

As the bonding material, there was used slurry containing aluminosilicate inorganic fibers and SiC particles. There was used a bonding material contained 30 mass% of water, 30 mass% of aluminosilicate inorganic fibers, and 30 mass% of SiC particles with respect to the entire bonding material. The other components contained in the bonding material were an organic binder, a resin balloon, and a dispersant.

The outer periphery of the bonded body obtained above was ground to obtain a bonded body having a circular cross section perpendicular to the cell extension direction. At this time, only 12 honeycomb segments forming the outermost periphery were ground.

Next, the bonded body having the outer periphery ground was subjected to the outer periphery coating treatment to obtain a plugged honeycomb structure (see Fig. 1). The outer periphery coating material used was prepared by adding additives such as an organic binder, a resin balloon, and a dispersant, to an inorganic raw material of inorganic fibers, colloidal silica, clay, SiC particles, and the like; and adding water to them, followed by kneading.

The diameter of the bottom face of the honeycomb structure obtained above was 143.8 mm.

The plugged honeycomb structure obtained above was measured for "maximum main stress (MPa) in central portion", "pressure loss (kPa)", and "presence/absence of end face crack in central portion". The measurement results are shown in Table 1.

### [Maximum main stress (MPa) in central portion]

The geometry structure of the plugged honeycomb structure is constructed from a CAD model, and the maximum main stress generated in the structure constructed from the model is obtained by a finite element method analysis software (trade name: ANSYS Release 11.0) produced by ANSYS JapanK.K. At that time, "partition wall thickness", "cell density", "cell pitch", "diameter of bottom face", "length in cell extension direction", "intersection point ratio of inflow cell or outflow cell", "length of plugging portion", and "outer wall thickness" are given as parameters of the geometry structure of the structure; and "Young's modulus", "Poisson' s ratio", and "thermal expansion coefficient" of the honeycomb structure measured in advance are given in the finite element method analysis, and at the same time, a temperature distribution generated in a plugged honeycomb structure obtained by a soot combustion test conducted in advance is appropriately given to be able to obtain the aimed maximum main stress. In the present Example, there was obtained the maximum main stress of a honeycomb segment present in a central portion of a cross section perpendicular to the cell extension direction of the plugged honeycomb structure. In Table 1, the maximum main stress in the central portion is shown as "6g/LDTI maximum stress in central portion upon regeneration (MPa)".

In addition, the "ratio of the maximum stress in the central portion (MPa) of Examples 1 to 3 and 8 to 10 and Comparative Examples 4 and 5 with respect to the maximum stress in the outer peripheral portion (MPa) of Comparative Example 1", the "ratio of the maximum stress in the central portion (MPa) of Examples 4 and 6 with respect to the maximum stress in the central portion (MPa) of Comparative Example 2", and the "maximum stress in the central portion (MPa) of Examples 5 and 7 with respect to the maximum stress in the central portion (MPa) of Comparative Example 3" are shown as the "base ratios" of the maximum stress.

### [Pressure loss (kPa)]

The pressure loss of the plugged honeycomb structure was measured by the use of the "pressure loss measuring apparatus for a filter" described in JP-A-2005-172652. As the measurement conditions, the flow rate of the fluid was 10 Nm³/min. , and the fluid temperature upon the experiment was 25°C.

In addition, "ratio of the pressure loss (kPa) of Examples 1 to 3 and 8 to 10 and Comparative Examples 4 and 5 with respect to the pressure loss (kPa) of Comparative Example 1", "ratio of the pressure loss (kPa) of Examples 4 and 6 with respect to the pressure loss (kPa) of Comparative Example 2", and "ratio of the pressure loss (kPa) of Examples 5 and 7 with respect to the pressure loss (kPa) of Comparative Example 3" are shown as the base ratios of pressure loss.

### [Present/absent of end face crack in central portion]

Crack generation in end face portions of the honeycomb segments present in the central portion of a cross section perpendicular to the cell extension direction of the honeycomb segment bonded body (plugged honeycomb structure) after the soot combustion test was judged by eye observation, and evaluation of "present" was given to the case of having crack generation, while evaluation of "absent" was given to the case of having no crack generation. The soot combustion test is conducted as the following method. The plugged honeycomb structure is used as a DPF, where soot is deposited to conduct regeneration (soot combustion). In the first place, a ceramic thermally unexpandable mat is wrapped around the outer periphery of the plugged honeycomb structure as a holding material, and the structure is pressed into a stainless steel (SUS409) can to obtain a canning structure. Then, the soot-containing combustion gas generated by the combustion of a diesel fuel (light oil) is sent from one end face of the plugged honeycomb structure and discharged from the other end face. By this operation, the soot of 6g per 1 liter of the capacity of the plugged honeycomb structure is deposited in the plugged honeycomb structure. After cooling the plugged honeycomb structure down to room temperature (25°C), combustion gas at 680°C is sent from one end face of the plugged honeycomb structure. By combusting the deposited soot, when the pressure loss of the plugged honeycomb structure falls, the flow rate of the combustion gas is reduced, thereby combusting the soot quickly.

**Table 1**

| | Unreinforced cell intersection ratio | Reinforced cell intersection ratio | Position of reinforced segment | Position of reinforced cell | Partition wall thickness | Cell pitch | 6 g/LDTI maximum stress in central portion upon regeneration | | Pressure loss | | Presence/ absence of end face crack in central portion |
|---|---|---|---|---|---|---|---|---|---|---|---|
| | | | | | mm | mm | MPa | Base ratio | kPa | Base ratio | |
| Example 1 | 1.410 | 2.200 | Central four | Intersection portion | 0.305 | 1.47 | 46.0 | 0.51 | 2.439 | 1.008 | Absent |
| Example 2 | 1.410 | 2.200 | All | Intersection portion | 0.305 | 1.47 | 41.1 | 0.46 | 2.456 | 1.015 | Absent |
| Example 3 | 1.410 | 2.200 | All | Diagonal line | 0.305 | 1.47 | 36.3 | 0.41 | 2.464 | 1.018 | Absent |
| Example 4 | 1.410 | 2.700 | Central four | Intersection portion | 0.127 | 2.54 | 33.0 | 0.75 | 0.958 | 1.004 | Absent |
| Example 5 | 1.410 | 1.700 | Central four | Intersection portion | 0.508 | 1.47 | 17.3 | 0.81 | 5.325 | 1.003 | Absent |
| Example 6 | 1.410 | 9.300 | All | Diagonal line | 0.127 | 2.54 | 11.0 | 0.12 | 2.625 | 1.085 | Absent |
| Example 7 | 1.410 | 1.500 | Central four | Intersection portion | 0.508 | 1.47 | 66.9 | 0.75 | 2.426 | 1.002 | Absent |
| Example 8 | 1.410 | 2.200 | All | All in diagonal line region (diagonal line + 5 cells) | 0.305 | 1.47 | 34.4 | 0.39 | 2.489 | 1.028 | Absent |
| Example 9 | 1.410 | 10.000 | All | Diagonal line | 0.305 | 2.54 | 10.7 | 0.12 | 4.170 | 1.723 | Absent |
| Example 10 | 1.410 | 2.200 | Central four | Intersection portion (formed later) | 0.305 | 1.47 | 46.0 | 0.51 | 2.439 | 1.008 | Absent |
| Comp. Ex. 1 | 1.410 | 1.410 | - | - | 0.305 | 1.47 | 89.4 | 1.00 | 2.420 | 1.000 | Present |
| Comp. Ex. 2 | 1.410 | 1.410 | - | - | 0.127 | 2.54 | 43.8 | 1.00 | 0.954 | 1.000 | Absent |
| Comp.Ex.3 | 1.410 | 1.410 | - | - | 0.508 | 1.27 | 21.5 | 1.00 | 5.312 | 1.000 | Absent |
| Comp. Ex. 4 | 1.410 | 2.200 | All | Diagonal line + 6 cells | 0.305 | 1.47 | 35.4 | 0.40 | 2.803 | 1.158 | Absent |
| Comp. Ex. 5 | 1.410 | 2.200 | All | All cells | 0.305 | 1.47 | 32.6 | 0.36 | 3.134 | 1.295 | Absent |

### (Examples 2 to 10, and Comparative Examples 1 to 5)

The plugged honeycomb structures were manufactured in the same manner as in Example 1 except that the partition wall thickness, cell pitch, position of reinforced segment(s) and position of cells (presence/absence of a reinforcing portion) of the honeycomb segments were changed as shown in Table 1 and that the intersection ratio (L/T) of reinforced cells and the intersection ratio (L/T) of unreinforced cells were changed as shown in Table 1 . The plugged honeycomb structures were evaluated in the same manner as in Example 1. The results are shown in Table 1. Incidentally, in Example 10, no reinforcing portion was formed upon forming the honeycomb segment formed body, and the reinforcing portions were formed separately after the honeycomb segment formed body was formed by using a reinforcing material for forming the reinforcing portions. Specifically, in the first place, the same material as the ceramic forming raw material used for the honeycomb segment formed body was used, and slurried reinforcing material was prepared. The reinforcing material was prepared so as to have a higher water content than the ceramic forming raw material used for the honeycomb segment formed body. Next, the reinforcing material was put in a container, and the honeycomb segment was immersed in the reinforcing material from the outflow side end face to form reinforcing portions. The shape of the reinforcing portions was made the same as the reinforcing portions in Example 1.

Regarding Examples 2, 3, 6, 8 and Comparative Examples 4, 5, all the 16 honeycomb segments were reinforced cells. They are shown as "all" in the column of the "position of reinforced segment" in Table 1. Regarding Examples 3, 6, 9 and Comparative Example 4, the reinforced cells of the reinforced segment were all the outflow cells present on the diagonal lines of a cross section. They are shown as the "diagonal line" in the column of the "position of reinforced cell". Regarding Example 8, the reinforced cells of the reinforced segment were all the outflow cells present in the diagonal line region. They are shown as "all in diagonal line (diagonal line + 5 cells)" in the column of the "position of reinforced cell" in Table 1. Regarding Comparative Example 4, the reinforced cells of the reinforced segment were all the outflow cells in the region of adjacent six cells across partition walls from the cell present on a diagonal line of a cross section. They are shown as the "diagonal line + 6 cells" in the column of the "position of reinforced cell" in Table 1 . In Comparative Example 5, the reinforced cells of the reinforced segment were all the outflow cells. They are shown as "all cells" in the column of the "position of reinforced cell" in Table 1.

### (Results)

As shown in Table 1, each of the plugged honeycomb structures of Examples 1 to 10 had small maximum stress and excellent durability. In addition, in comparison with the plugged honeycomb structure of Comparative Examples 4 and 5, the pressure loss was suppressed. That is, it was found out that excessive increase of the reinforcing cells seriously increases pressure loss as in the plugged honeycomb structures of Comparative Example 5 without increasing the effect in improving durability to a large extent. In addition, when the plugged honeycomb structures of Examples 1 to 10 were compared with the plugged honeycomb structures of Comparative Examples 1 and 2, where no reinforcing portion was formed, remarkable improvement in durability (maximum stress) was confirmed in the plugged honeycomb structures of Examples 1 to 10, and, in particular, an end face crack, which was found in Comparative Example 1, was not confirmed in Example 1. Meanwhile, no large increase in pressure loss was found.

### Industrial Applicability

A plugged honeycomb structure of the present invention can suitably be used as a filter for purifying gas discharged from an internal combustion engine such as a diesel engine or various combustion apparatus.

## Claims

1. A plugged honeycomb structure comprising:
a honeycomb structure having a plurality of columnar honeycomb segments having porous partition walls separating and forming a plurality of cells extending from an inflow side end face to the outflow side end face and functioning as fluid passages and bonded in a state that side faces of the honeycomb segments face one another,
outflow side plugging portions disposed in openings of predetermined cells on the outflow side end face of each of the honeycomb segments and forming inflow cells each of which has an open inflow side end face and a plugged outflow side end face, and
in flow side plugging portions disposed in openings of remaining cells on the inflow side end face of each of the honeycomb segments and forming outflow cells each of which has an open outflow side end face and a plugged inflow side end face;
wherein the honeycomb segments constituting the honeycomb structure have a complete segment having a quadrangular cross section perpendicular to the cell extension direction of the honeycomb segments,
at least one of the honeycomb segments is a reinforced segment having a reinforcing portion for reinforcing the outflow cell in at least one corner portion, where the partition walls intersect one another in a cross section perpendicular to the cell extension direction, of at least the outflow cell present in the intersection portion of the diagonal lines or the outflow cell present at a position having the shortest distance from the intersection portion among the outflow cells in a region composed of the cells present on diagonal lines in the quadrangle cross section of the honeycomb segment and 5 cells adjacent to one another in series across the partition walls from the cells present on the diagonal lines, and
the honeycomb segment including the centroid of the cross section of the honeycomb structure or being present at the position having the shortest distance from the centroid in the cross section perpendicular to the cell extension direction of the honeycomb structure is at least the reinforced segment.

2. The plugged honeycomb structure according to Claim 1, wherein each of the outflow cells having a reinforced portion formed therein of the reinforced segment includes a reinforced corner portion having the reinforcing portion formed therein and an unreinforced corner portion having no reinforcing portion formed therein.

3. The plugged honeycomb structure according to Claim 1, wherein all the corner portions in each of the outflow cells having the reinforcing portion of the reinforced segment have the reinforcing portions formed therein.

4. The plugged honeycomb structure according to any one of Claims 1 to 3, wherein, in the reinforced segment, all the outflow cells present on the diagonal line on a cross section of the quadrangle of the honeycomb segment have the reinforcing portions.

5. The plugged honeycomb structure according to any one of Claims 1 to 4, wherein, in the reinforced segment, the reinforcing portions are formed in all the cells present on diagonal lines in the quadrangle cross section of the honeycomb segment and in a region of 5 cells adjacent to one another in series across the partition walls from the cells present on the diagonal lines.

6. The plugged honeycomb structure according to any one of Claims 1 to 5, wherein all the complete segments are at least the reinforced segments.

7. The plugged honeycomb structure according to Claim 6, wherein all the honeycomb segments are the reinforced segments.

8. The plugged honeycomb structure according to any one of Claims 1 to 7, wherein the ratio of the intersection distance in the partition wall intersection portion from the surface of the reinforcing portion of the outflow cell having the reinforcing portion formed therein to the surface of another cell disposed across the intersection of the partition walls separating and forming the outflow cell having the reinforcing portion with respect to an average thickness of the partition walls excluding the reinforcing portion is 1.5 to 9.3.

9. The plugged honeycomb structure according to any one of Claims 1 to 8, wherein the reinforcing portion accounts for 0.05 to 20% of the area of the opening excluding the reinforcing portion in the cross section perpendicular to the cell extension direction.

## Patentansprüche

1. Verschlossene Wabenstruktur, die Folgendes umfasst:
eine Wabenstruktur, die eine Vielzahl von säulenförmigen Wabensegmenten mit porösen Trennwänden aufweist, die eine Vielzahl von Zellen voneinander trennen und ausbilden, die sich von einer einströmungsseitigen Stirnfläche zur ausströmungsseitigen Stirnfläche erstrecken und als Fluiddurchgänge fungieren und in einem Zustand haftschlüssig verbunden sind, sodass Seitenflächen der Wabensegmente einander gegenüberliegen,
ausströmungsseitige Verschlussteile, die in Öffnungen vorbestimmter Zellen an der ausströmungsseitigen Stirnfläche jedes der Wabensegmente ausgebildet sind und einströmungsseitige Zellen ausbilden, deren jede eine offene einströmungsseitige Stirnfläche und eine verschlossene ausströmungsseitige Stirnfläche aufweist, und
einströmungsseitige Verschlussteile, die in Öffnungen der verbleibenden Zellen an der einströmungsseitigen Stirnfläche jedes der Wabensegmente ausgebildet sind und ausströmungsseitige Zellen ausbilden, deren jede eine offene ausströmungsseitige Stirnfläche und eine verschlossene einströmungsseitige Stirnfläche aufweist;
worin die Wabensegmente, die die Wabenstruktur darstellen, ein vollständiges Segment mit einem viereckigen Querschnitt aufweist, der senkrecht auf die Zellenerstreckungsrichtung der Wabensegmente steht,
zumindest eines der Wabensegmente ein verstärktes Segment mit einem Verstärkungsabschnitt zum Verstärken der Ausströmzelle in zumindest einem Eckabschnitt, wo die Trennwände einander in einem senkrecht auf die Zellenerstreckungsrichtung stehenden Querschnitt überschneiden, von zumindest der Ausströmzelle, die sich im Überschneidungsabschnitt der diagonalen Linien befindet, oder der Ausströmzelle, die sich an der Position mit der kürzesten Entfernung von dem Überschneidungsabschnitt unter den Ausströmzellen in einem aus den auf diagonalen Linien im viereckigen Querschnitt des Wabensegments und 5 über die Trennwände hinweg in Serie zueinander benachbarten Zellen von den auf diagonalen Linien befindlichen Zellen zusammengesetzten Bereich befindet, ist, und
das Wabensegment, das den Schwerpunkt des Querschnitts der Wabenstruktur umfasst oder sich an der Position mit der kürzesten Entfernung von dem Schwerpunkt in dem senkrecht auf die Zellenerstreckungsrichtung der Wabenstruktur stehenden Querschnitt befindet, zumindest das verstärkte Segment ist.

2. Verschlossene Wabenstruktur nach Anspruch 1, worin jede der Ausströmzellen mit einem darin ausgebildeten verstärkten Abschnitt des verstärkten Segments einen verstärkten Eckabschnitt mit dem darin ausgebildeten Verstärkungsabschnitt und einen unverstärkten Eckabschnitt ohne darin ausgebildeten Verstärkungsabschnitt umfasst.

3. Verschlossene Wabenstruktur nach Anspruch 1, worin in allen Eckabschnitten in jeder der Ausströmzellen mit dem Verstärkungsabschnitt des verstärkten Segments Verstärkungsabschnitte ausgebildet sind.

4. Verschlossene Wabenstruktur nach einem der Ansprüche 1 bis 3, worin in dem verstärkten Segment alle auf der diagonalen Linie auf einem Querschnitt des Vierecks des Wabensegments befindlichen Ausströmzellen die Verstärkungsabschnitte aufweisen.

5. Verschlossene Wabenstruktur nach einem der Ansprüche 1 bis 4, worin in dem verstärkten Segment die Verstärkungsabschnitte in allen Zellen ausgebildet sind, die sich auf diagonalen Linien im viereckigen Querschnitt des Wabensegments und in einem Bereich von 5 über die Trennwände hinweg in Serie zueinander benachbarten Zellen von den auf diagonalen Linien befindlichen Zellen befinden.

6. Verschlossene Wabenstruktur nach einem der Ansprüche 1 bis 5, worin alle vollständigen Segmente zumindest die verstärkten Segmente sind.

7. Verschlossene Wabenstruktur nach Anspruch 6, worin alle Wabensegmente die verstärkten Segmente sind.

8. Verschlossene Wabenstruktur nach einem der Ansprüche 1 bis 7, worin das Verhältnis zwischen der Überschneidungsdistanz im Trennwandüberschneidungsabschnitt von der Oberfläche des Verstärkungsabschnitts der Ausströmzelle, in der der Verstärkungsabschnitt ausgebildet ist, und der Oberfläche einer weiteren Zelle, die über die Überschneidung der Trennwände, die die Ausströmzelle mit dem Verstärkungsabschnitt abtrennen und ausbilden, ausgebildet ist, in Bezug auf die durchschnittliche Dicke der Trennwände unter Ausschluss des Verstärkungsabschnitts 1,5 bis 9,3 beträgt.

9. Verschlossene Wabenstruktur nach einem der Ansprüche 1 bis 8, worin der Verstärkungsabschnitt 0,05 bis 20 % der Fläche der Öffnung unter Ausschluss des Verstärkungsabschnitts in dem auf die Zellenerstreckungsrichtung senkrecht stehenden Querschnitt ausmacht.

## Revendications

1. Structure en nid d'abeilles obturée comprenant :
une structure en nid d'abeilles comportant une pluralité de segments de nid d'abeilles colonnaires comportant des parois de séparation poreuses séparant et formant une pluralité de cellules s'étendant d'une face d'extrémité côté flux d'entrée jusqu'à la face d'extrémité côté flux de sortie et agissant en tant que passages de fluide et liées dans un état dans lequel les faces latérales des segments de nid d'abeilles se font face,
des parties d'obturation côté flux de sortie disposées dans les ouvertures de cellules prédéterminées sur la face d'extrémité côté flux de sortie de chacun des segments de nid d'abeilles et formant des cellules de flux d'entrée ayant chacune une face d'extrémité côté flux d'entrée ouverte et une face d'extrémité côté flux de sortie obturée, et
des parties d'obturation côté flux d'entrée disposées dans les ouvertures des cellules restantes sur la face d'extrémité côté flux d'entrée de chacun des segments de nid d'abeilles et formant des cellules de flux de sortie ayant chacune une face d'extrémité côté flux de sortie ouverte et une face d'extrémité côté flux d'entrée obturée ;
dans laquelle les segments de nid d'abeilles constituant la structure en nid d'abeilles comportent un segment complet ayant une section transversale quadrangulaire perpendiculaire à la direction d'extension des cellules des segments de nid d'abeilles,
au moins l'un des segments de nid d'abeilles est un segment renforcé comportant une partie de renforcement pour renforcer la cellule de flux de sortie dans au moins une partie de coin, où les parois de séparation se croisent en coupe transversale perpendiculaire à la direction d'extension des cellules, d'au moins la cellule de flux de sortie présente dans la partie d'intersection des diagonales ou de la cellule de flux de sortie présente à une position ayant la distance la plus courte par rapport à la partie d'intersection parmi les cellules de flux de sortie dans une région composée des cellules présentes sur les diagonales en coupe transversale quadrangulaire du segment de nid d'abeilles et de 5 cellules adjacentes les unes aux autres en série à travers les parois de séparation à partir des cellules présentes sur les diagonales, et
le segment de nid d'abeilles comprenant le centroïde de la section transversale de la structure en nid d'abeilles ou étant présent à la position ayant la distance la plus courte par rapport au centroïde en coupe transversale perpendiculaire à la direction d'extension des cellules de la structure en nid d'abeilles est au moins le segment renforcé.

2. Structure en nid d'abeilles obturée selon la revendication 1, dans laquelle chacune des cellules de flux de sortie dans lesquelles une partie renforcée est formée du segment renforcé comprend une partie de coin renforcée dans laquelle la partie de renforcement est formée et une partie de coin non renforcée dans laquelle aucune partie de renforcement n'est formée.

3. Structure en nid d'abeilles obturée selon la revendication 1, dans laquelle toutes les parties de coin dans chacune des cellules de flux de sortie comportant la partie de renforcement du segment renforcé comportent les parties de renforcement formées dans celles-ci.

4. Structure en nid d'abeilles obturée selon l'une quelconque des revendications 1 à 3, dans laquelle, dans le segment renforcé, toutes les cellules de flux de sortie présentes sur la diagonale dans la section transversale du quadrilatère du segment de nid d'abeilles comportent les parties de renforcement.

5. Structure en nid d'abeilles obturée selon l'une quelconque des revendications 1 à 4, dans laquelle, dans le segment renforcé, les parties de renforcement sont formées dans toutes les cellules présentes sur les diagonales dans la section transversale quadrangulaire du segment de nid d'abeilles et dans une région de 5 cellules adjacentes les unes aux autres en série à travers les parois de séparation à partir des cellules présentes sur les diagonales.

6. Structure en nid d'abeilles obturée selon l'une quelconque des revendications 1 à 5, dans laquelle tous les segments complets sont au moins les segments renforcés.

7. Structure en nid d'abeilles obturée selon la revendication 6, dans laquelle tous les segments de nid d'abeilles sont les segments renforcés.

8. Structure en nid d'abeilles obturée selon l'une quelconque des revendications 1 à 7, dans laquelle le rapport entre la distance d'intersection dans la partie d'intersection des parois de séparation de la surface de la partie de renforcement de la cellule de flux de sortie dans laquelle la partie de renforcement est formée jusqu'à la surface d'une autre cellule disposée de l'autre côté de l'intersection des parois de séparation séparant et formant la cellule de flux de sortie comportant la partie de renforcement et une épaisseur moyenne des parois de séparation à l'exclusion de la partie de renforcement est de 1,5 à 9,3.

9. Structure en nid d'abeilles obturée selon l'une quelconque des revendications 1 à 8, dans laquelle la partie de renforcement représente 0,05 à 20 % de l'aire de l'ouverture à l'exclusion de la partie de renforcement en coupe transversale perpendiculaire à la direction d'extension des cellules.
